# EUROPÄISCHE PATENTANMELDUNG

(11) **EP 0 841 313 A2**
(43) Veröffentlichungstag der Anmeldung: **13.05.1998**
(21) Anmeldenummer: 97119377.6
(22) Anmeldetag: 05.11.1997
(51) Int. Cl.: C05F 17/02, C05F 17/00, C05F 9/04

(54) **Vorrichtung zum Verarbeiten von Pflanzenmaterial, Kompostiervorrichtung sowie Verfahren zum Mietenkompostieren von Pflanzenmaterial**

(30) Priorität: 06.11.1996 DE 29619281 U; 22.05.1997 DE 19721531
(71) Anmelder: Zündapp Gartentechnik GmbH & Co. Entwicklungs KG, 82234 Wessling (DE)
(72) Erfinder: Specht, Martin, 82340 Feldafing (DE)
(74) Vertreter: Nöth, Heinz, Dipl.-Phys.

(57) **Zusammenfassung**

Vorrichtung zum Verarbeiten von Pflanzenmaterial, Pflanzenteilen, Pflanzenabfall oder vergleichbarem Biomüll, mit einer Förderschneckeneinheit 18 und einer nachgeordneten Zerkleinerungseinrichtung 20 für das verdichtete Pflanzenmaterial, die einen Schneidmessersatz 21 mit einer Lochscheibe 24 aufweist, wobei die Förderschneckeneinheit 18 eine Förderschnecke 19 mit einem als Schneide 39 ausgebildeten Schneckenkopf 33 und eine Gegenschneide 43 an einem Gehäuse der Förderschneckeneinheit 18 aufweist.

## Beschreibung

Die Erfindung betrifft eine Vorrichtung zum Verarbeiten von Pflanzenmaterial wie Pflanzen, Pflanzenteile, Pflanzenreste und dergleichen Biomüll, eine Kompostiervorrichtung sowie ein Verfahren zum Mietenkompostieren von Pflanzenmaterial.

Gartenhäcksler zum Verarbeiten von Pflanzenresten und von Baum- und Heckenschnitt sind allgemein bekannt. Sie weisen rotierende Schlagmesser oder Schnitzelmesser auf, die insbesondere zum Zerkleinern von Zweigen und Ästen geeignet sind. Die dabei erhaltenen Zweig-, Ast- und Pflanzenteile sind zwar zerkleinert, weisen jedoch üblicherweise noch nicht die für ein schnelles Kompostieren der Pflanzenreste erforderliche aufgeschlossene Zellstruktur auf, die einen schnellen Zutritt von Mikroorganismen gestattet. Außerdem ist das Volumen der zerkleinerten Pflanzenreste immer noch zu groß und das schlagende Messer hat ein lautes Betriebsgeräusch zur Folge. Eine Weichgutaufbereitung ist mit einem solchen Häcksler nicht möglich.

Aufgabe der vorliegenden Erfindung ist es daher, eine Vorrichtung zum Verarbeiten von Pflanzenmaterial zu schaffen, die das Pflanzenmaterial unterschiedlicher Art in einen zum schnellen Kompostieren geeigneten Zustand bringt und dabei geräuscharm und betriebssicher arbeitet. Es ist eine weitere Aufgabe der Erfindung, eine Kompostiervorrichtung zu schaffen, die Pflanzenmaterial schnell in Kompost umwandeln kann und auf einfache Art und Weise bedienbar ist. Schließlich liegt der Erfindung die Aufgabe zugrunde, ein Verfahren zum Mietenkompostieren von Pflanzenmaterial anzugeben, das eine verbesserte Kompostierleistung bietet.

Die genannten Aufgaben werden erfindungsgemäß durch eine Vorrichtung zum Verarbeiten von Pflanzenmaterial oder Biomüll mit den Merkmalen des Anspruchs 1, durch eine Kompostiervorrichtung mit den Merkmalen des Anspruchs 48 sowie durch ein Verfahren zum Mietenkompostieren mit den Merkmalen des Anspruchs 62 gelöst. Vorteilhafte Ausgestaltungen der Erfindung sind in den jeweiligen abhängigen Ansprüchen angegeben.

Die erfindungsgemäße Vorrichtung zeichnet sich dadurch aus, daß mit der Förderschneckeneinheit und der nachgeordneten Zerkleinerungseinrichtung das anfallende Pflanzenmaterial zerkleinert werden kann. Der Begriff Pflanzenmaterial soll hier für jegliches Pflanzenmaterial, Grüngut und Teile davon stehen, das als Abfall bei Floristen oder im öffentlichen oder privaten Bereich z. B. in Gärten oder Parks anfällt. Auch sperrige Äste und Zweige können leicht zugeführt werden. Die Förderschneckeneinheit kann gleichzeitig als Verdichterschneckeneinrichtung wirken, so daß nicht nur das Volumen der Pflanzenmasse vorteilhafterweise verkleinert wird, sondern durch die dabei entstehenden Reibkräfte auch die Zellstrukturen weitgehend aufgeschlossen werden, wodurch eine anschließende Kompostierung durch den erleichterten Angriff von Mikroorganismen beim Rotteprozess beschleunigt wird. Zusätzlich wird durch die Zerkleinerungseinrichtung die verdichtete Pflanzenmasse weiter zerkleinert, um den genannten Effekt noch zu verstärken. Der als Schneide ausgebildete Schneckenkopf kann im Zusammenwirken mit einer Gegenschneide am Gehäuse der Förderschneckeneinheit eine Vorzerkleinerung bewirken, wobei große oder langgestreckte Pflanzenteile wie Äste oder Zweige beim Zuführen problemlos verarbeitet und zerkleinert werden und ein Blockieren der Vorrichtung weitgehend verhindert werden kann.

Der Messersatz mit einem oder zwei Messern ist in einem Gehäuse gekapselt und dreht sich mit einer im Vergleich zu einem Häcksler langsamen Drehzahl. Dies bedeutet eine erhebliche Geräuschreduzierung gegenüber einem Häcksler. Schalldämpfend wirkt auch die zerkleinerte Pflanzenmasse in der Verdichterschnecke und dem Messersatz. Der Schneidvorgang eines Messers erzeugt weniger Geräusch gegenüber dem Häckseln und Schnitzeln in einem Häcksler, der ein offenes Messer ohne Gegenschneide aufweist, mit dem das Pflanzengut zerrissen, gehäckselt und geschnitzelt wird.

Ein wesentlicher Vorteil ergibt sich aus der leichten Austauschbarkeit des Schneidsatzes in Abhängigkeit von dem zu verarbeitenden Pflanzenmaterial. Eine Lochscheibengestaltung mit vielen Löchern im Schneidbereich ergibt viele Gegenschneiden. Eine Optimierung der Lochgröße, der Lochform und der Lochanzahl in der Lochscheibe kann somit in Abhängigkeit vom Pflanzenmaterial vorgenommen werden, so daß optimierte Spezialscheiben oder Durchschnittsscheiben für einen weiten Anwendungsbereich verwendet werden können, wobei eine Schnittkraftreduzierung durch optimale Anpassung erzielbar ist.

Das Gehäuse der Förderschnecke, die auch als Verdichterschnecke ausgebildet sein kann, kann geteilt sein und ebenfalls zum Austausch der Förder- und/oder Verdichterschnecke leicht geöffnet werden, um auch eine Anpassung der Verdichterschnecke an das Pflanzenmaterial vornehmen zu können.

Der Messersatz enthält zweckmäßigerweise eine Vorschneideplatte vor der Lochscheibe und fakultativ ein zweites Messer (ein- oder mehrflügelig mit einer oder mehreren geraden oder sichelförmig gebogenen Schneiden) an der Rückseite der Lochscheibe. Durch die Vorspannung der Vorschneideplatte und des Messers gegen die Lochscheibe wird ein Selbstschärfungseffekt für die Messerschneiden durch den Gleitkontakt an der Lochscheibe erzielt.

Die Verdichterschnecke ist von einem Gehäuse umgeben, das eine Eintrittsöffnung für das Pflanzenmaterial aufweist. Vorteilhafterweise ist die Verdichterschnecke mit minimiertem Spiel bzw. Ringspalt von bis zu nur etwa 0,1 mm zwischen ihrem Umfang am Schneckenkopf und dem umgebenden Gehäuse angeordnet.

Zweckmäßigerweise ist eine Zuführeinrichtung für das Pflanzenmaterial vorgesehen, die in der einfachsten Form als Trichter gebildet ist. Zusätzlich kann eine Fördereinrichtung zur Zwangsbefüllung mit Pflanzenmaterial vorgesehen sein. Die Fördereinrichtung kann zumindest ein rotierendes oder umlaufendes Element mit vorstehenden Zähnen oder Haken zum Ergreifen und Zwangsfördern des Pflanzenmaterials aufweisen. Ein derartiges rotierendes Element kann in der Art einer Walze mit mehreren radial hervorstehenden Messern ausgebildet sein.

Durch die vorteilhaften Gestaltungen der Fördermittel ist eine große Bedienungs- und Betriebssicherheit gewährleistet. Bei motorischem Antrieb können verschiedene Sicherungseinrichtungen ein schnelles Abschalten des Antriebs der Vorrichtung bewirken.

Wenn die erfindungsgemäße Vorrichtung eine Dehydratisierungseinrichtung aufweist, kann die Feuchtigkeit aus dem Pflanzenmaterial gezielt ausgepreßt werden, so daß der Restfeuchtegehalt einstellbar ist und das Pflanzenmaterial für eine Kompostierung optimal eingestellt werden kann.

Zweckmäßigerweise enthält die Vorrichtung einen Flüssigkeitsanschluß zum Zuführen von Spül- oder Reinigungsflüssigkeit, so daß nach der Benutzung die noch feuchten Pflanzenreste leicht entfernt werden können.

Die erfindungsgemäße Kompostiervorrichtung bietet eine stationäre Mietenkompostierung, kann jedoch, da das Pflanzenmaterial keinen direkten Bodenkontakt aufweist, auch problemlos versetzt werden. Ein wesentlicher Vorteil liegt darin, daß das ansonsten erforderliche Umstechen der Kompostmiete entfällt, da der fertige Kompost ohne Behinderung durch benachbarten, darüberliegenden Kompost entnommen werden kann. Für den Transport der zu kompostierenden Pflanzenmasse bieten sich verschiedene Fördermöglichkeiten an, mit denen auch ein ununterbrochener Pflanzenmassenstrom stetig oder intermittierend bewegt werden kann. Zweckmäßigerweise ist die Transporteinrichtung als Linear- oder als Umlaufförderer oder dergleichen ausgebildet, der den Kompost in einzelnen Kompostbehältern aufnimmt und befördert. Dann kann auf unterschiedliche Kompostiergeschwindigkeiten einzelner Kompostportionen Rücksicht genommen werden. Für die Entnahme des fertigen Kompostes bieten sich verschiedene Möglichkeiten von der Ober- oder Unterseite des Gehäuses oder von der Seite durch Zusatzeinrichtungen an. Beispielsweise sind Klappen oder Deckel im Gehäuse vorgesehen, die Zuführ- und Entnahmeöffnungen freigeben können. Führungsschienen im Gehäuse können das Einschieben und das Herausziehen einzelner Kompostbehälter erleichtern.

Bei dem erfindungsgemäßen Verfahren zum Mietenkompostieren von Pflanzenmaterial wird das Pflanzenmaterial zuerst wesentlich zerkleinert, wobei die Pflanzenstruktur aufgeschlossen wird, dann wird der Restfeuchtegehalt des Pflanzenmaterials eingestellt, schließlich wird eine Kompostierumgebung mit geeignetem Klima bereitgestellt. Das Pflanzenmaterial wird dann auf eine Kompostierstrecke in der Kompostmiete gebracht, auf der es bewegbar ist und von der es nach Vollendung der Kompostierung gezielt entnehmbar ist, ohne durch benachbarten Kompost behindert zu sein. Kompostierbeschleuniger mit Mikroorganismen können zugegeben werden, wenn der direkte Kontakt mit dem Erdreich fehlt.

Nachfolgend wird die Erfindung anhand von Ausführungsbeispielen unter Bezugnahme auf Zeichnungen näher erläutert.
Es zeigt:
- Fig. 1: in einer perspektivischen Ansicht in schematischer Darstellung ein Ausführungsbeispiel einer erfindungsgemäßen Vorrichtung zum Verarbeiten von Pflanzenmaterial;
- Fig. 2: in perspektivischer Explosionsdarstellung Teile einer Verdichtereinrichtung und einer Zerkleinerungseinrichtung der Vorrichtung;

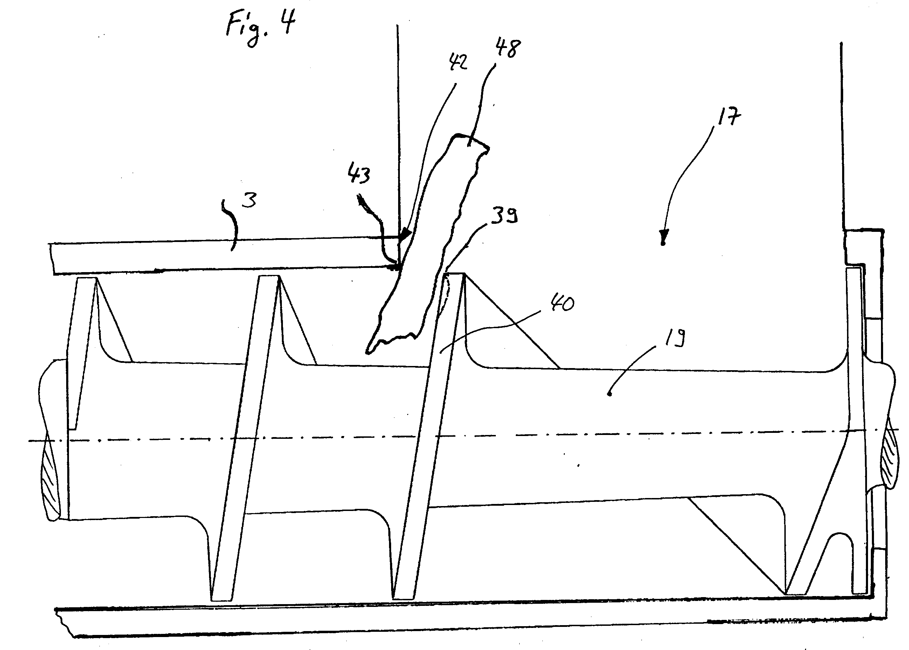

- Fig. 3: in perspektivischer Darstellung die in Fig. 2 gezeigten Teile in Einbaulage;
- Fig. 4: in einer Schnittansicht ein Verdichtergehäuse mit einer darin angeordneten Verdichterschnecke;
- Fig. 5: in schematischer Seitenansicht eine Fördereinrichtung der erfindungsgemäßen Vorrichtung;
- Fig. 6: in schematischer Seitenansicht eine Fördereinrichtung gemäß Fig. 5;
- Fig. 7: in schematischer Seitenansicht ein weiteres Ausführungsbeispiel einer Fördereinrichtung der erfindungsgemäßen Vorrichtung;
- Fig. 8: in schematischer Seitenansicht ein weiteres Ausführungsbeispiel einer Fördereinrichtung der erfindungsgemäßen Vorrichtung;
- Fig. 9: in schematischer Seitenansicht die Fördereinrichtung der Fig. 8 mit veränderter Position eines Fördermittels;
- Fig. 10: in mehreren Ansichten ein Förderprofil der Fördereinrichtung;
- Fig. 11: in perspektivischer Draufsicht eine Förderkettenanordnung eines Fördermittels;
- Fig. 12: in einer Schnittansicht ein Teil der Verdichtereinrichtung und die Zerkleinerungseinrichtung;
- Fig. 13: in einer Schnittansicht ein Teil der Verdichtereinrichtung, die Zerkleinerungseinrichtung und eine Dehydratisierungseinrichtung;
- Fig. 14: in einer axialen Draufsicht eine Schieberblende am Austritt des verdichteten Pflanzenmaterials aus der Dehydratisierungseinrichtung;
- Fig. 15: in einer Schnittansicht die Dehydratisierungseinrichtung mit der Schieberblende;
- Fig. 16: in einer Oberansicht die Schieberblende;
- Fig. 17: in einer axialen Draufsicht gemäß Fig. 14 die Schieberblende in einer Schließstellung;
- Fig. 18: in einer axialen Schnittansicht ein Gehäuse der Dehydratisierungseinrichtung mit zwei Leiteinrichtungen für das verdichtete Pflanzenmaterial;
- Fig. 19: in einer axialen Draufsicht das in Fig. 18 dargestellte Gehäuse der Dehydratisierungseinrichtung mit drei Leiteinrichtungen;
- Fig. 20: in einer seitlichen Draufsicht eine Verdichterschnecke der Dehydratisierungseinrichtung;
- Fig. 21: in einer axialen Schnittansicht ein Gehäuse der Dehydratisierungseinrichtung mit Stegen und Nuten als Leiteinrichtung;
- Fig. 22: in einer axialen Draufsicht ein Schneidmessersatz mit einem Schneidmesser;
- Fig. 23: das Schneidmesser der Fig. 22;
- Fig. 24: in einer Querschnittsansicht das Schneidmesser der Fig. 23;
- Fig. 25: in einer Querschnittsansicht ein Ausführungsbeispiel der erfindungsgemäßen Vorrichtung mit einer Materialzuführung mit Trichter und zwei Häckselwalzen;
- Fig. 26: in einer Oberansicht in verschiedenen Schnittebenen das Ausführungsbeispiel der Fig. 25;
- Fig. 27: in einer vergrößerten Querschnittsansicht das in Fig. 26 dargestellte Ausführungsbeispiel entlang der Schnittebene B - B in Fig. 26;
- Fig. 28: eine Ansicht entsprechend Fig. 27 mit einem Kamm für die Häckselwalzen;
- Fig. 29: in einer Schnittansicht ein weiteres Ausführungsbeispiel einer Fördereinrichtung;
- Fig. 30: in einer Schnittansicht eine erfindungsgemäße Vorrichtung mit Antriebsmotor und Dehydratisierungseinrichtung;
- Fig. 31: in einer Schnittansicht ein weiteres Ausführungsbeispiel der erfindungsgemäßen Vorrichtung mit einer zusätzlichen Materialzuführöffnung zur Förderschnecke;
- Fig. 32: in einer teilweise geschnittenen seitlichen Draufsicht eine erfindungsgemäße Vorrichtung in geneigter Anordnung in einem Trägergestell;
- Fig. 33: in einer teilweise geschnittenen axialen Draufsicht eine erfindungsgemäße Vorrichtung in einem Trägergestell;
- Fig. 34: eine Seitenansicht der Vorrichtung der Fig. 33;
- Fig. 35: in einer Längsansicht in prinzipieller Darstellung eine Kompostiervorrichtung gemäß der Erfindung;
- Fig. 36: in einer Seitendraufsicht in prinzipieller Darstellung die Kompostiervorrichtung der Fig. 35; und
- Fig. 37: in einer Längsansicht in prinzipieller Darstellung ein weiteres Ausführungsbeispiel einer Kompostiervorrichtung gemäß der Erfindung.

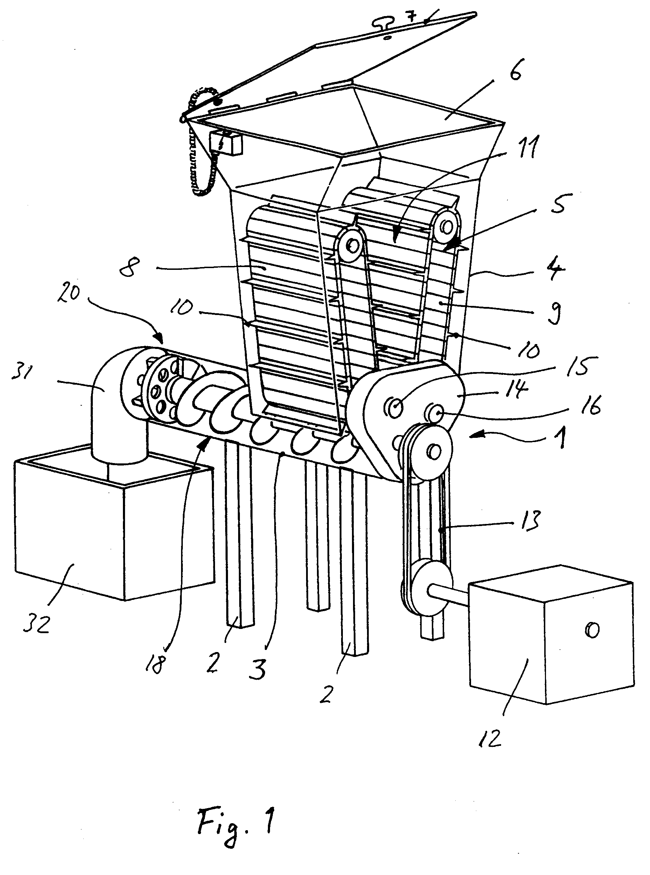

Ein in Fig. 1 dargestelltes Ausführungsbeispiel einer erfindungsgemäßen Vorrichtung zum Verarbeiten von Pflanzenmaterial oder Biomüll, der z. B. bei Floristen als Blumenreste, Zweige, Topfpflanzen und dergleichen und ansonsten als Laub, Grasschnitt und Äste aus Gärten, Parks oder Grünanlagen anfällt, enthält ein Traggestell 1 oder einen Ständer mit Standfüßen 2, ein am Traggestell 1 angebrachtes Verdichtergehäuse 3 einer Verdichtereinrichtung 18 und ein Gehäuse 4 für eine Transporteinrichtung 5 für das oben genannte Pflanzenmaterial, das durch einen Einfülltrichter 6 oder dergleichen, der mit einer Klappe 7 abdeckbar ist, in die Vorrichtung einfüllbar ist. Die Transporteinrichtung 5 enthält zwei umlaufende Fördermittel 8, 9, die als Förderbänder oder Förderketten mit hervorstehenden Förderprofilen 10 ausgebildet sind. Die Fördermittel 8, 9 bilden die sich gegenüberliegenden, bewegten Seitenbegrenzungen für einen sich abwärts erstreckenden Förderkanal 11, dessen Querschnitt in Förderrichtung abnimmt. Die beiden Fördermittel 8,9 werden durch eine Antriebseinrichtung mit einem Antriebsmotor 12, einem Keilriemengetriebe 13 sowie einem Zahnradgetriebe 14 über die jeweiligen unteren Antriebsräder 15, 16 oder Antriebswalzen derart angetrieben, daß sich die Fördermittel 8, 9 auf den sich zugewandten Seiten abwärts bewegen (siehe beispielsweise Pfeilrichtung in Fig. 5) und dabei eingefülltes Pflanzenmaterial abwärts mitnehmen, wobei die Förderprofile 10 die Mitnahme unterstützen und durch den sich verjüngenden Kanal 11 die Pflanzen zunehmend fester ergriffen werden.

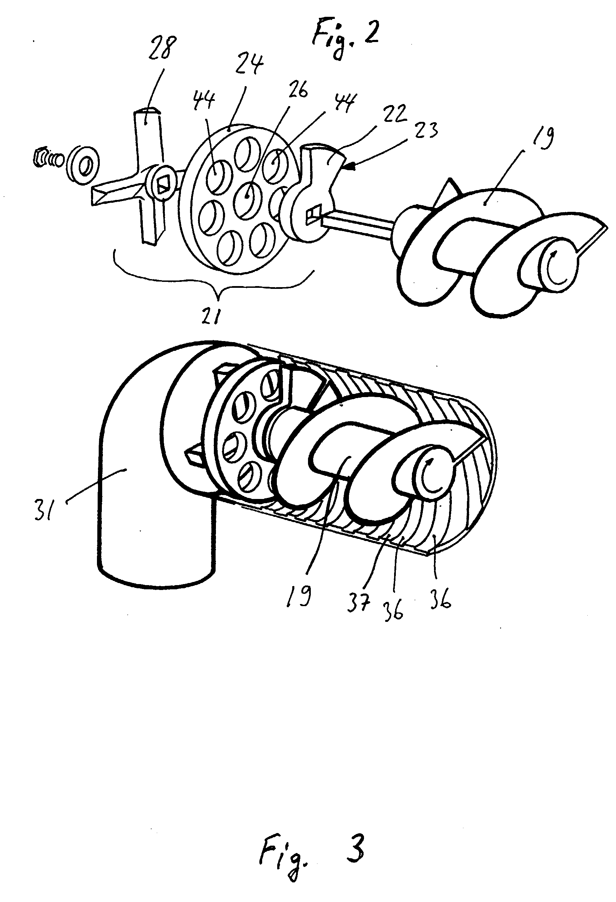

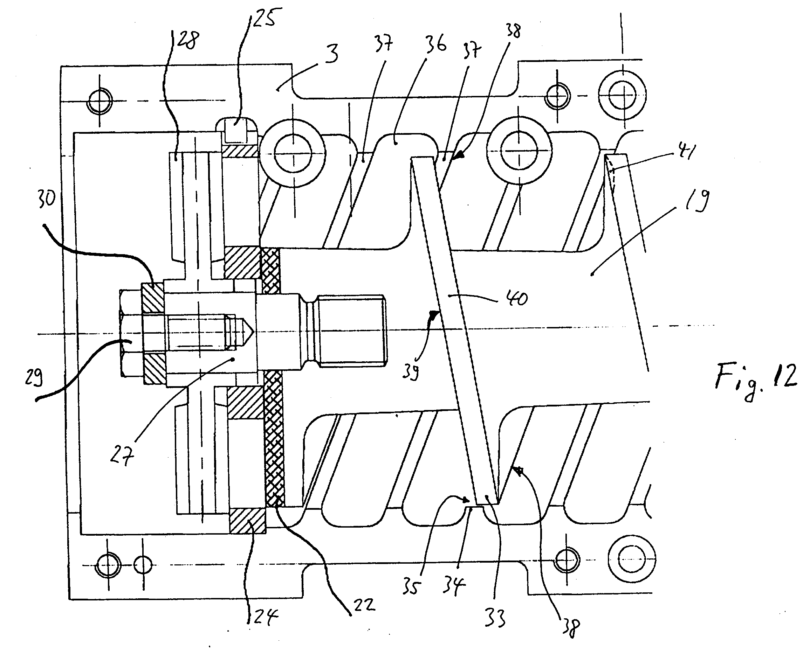

Der Förderkanal 11 mündet an seinem Unterende über eine Eintrittsöffnung 17 im Verdichtergehäuse 3 in die Verdichtereinrichtung 18, die eine im Verdichtergehäuse 3 drehbar gelagerte Förder- und Verdichterschnecke 19 enthält, die ebenfalls über den Antriebsmotor 12 und das Zahnradgetriebe 14 antreibbar ist. An die Verdichtereinrichtung 18 bzw. die Verdichterschnecke 19 schließt sich eine Zerkleinerungseinrichtung 20 an, die als Schneidmessersatz 21 (siehe Fig. 2) ausgebildet ist. Dieser enthält eine Schneidplatte 22, die am Ende der Verdichterschnecke 19 drehfest mit dieser verbunden ist und eine Schneide 23 aufweist. Eine Lochscheibe 24 ist anschließend an die Schneidplatte 22 im Verdichtergehäuse 3 gelagert und z. B. durch eine Paßfeder 25 (siehe Fig. 12) in Umfangsrichtung drehfest festgelegt. Die Lochscheibe 24 enthält eine mittige Lagerbohrung 26 zur Lagerung eines Zapfens 27 der Schnecke 19. Am freien Ende des Zapfens 27 ist ein mehrflügeliges Schneidmesser 28 drehfest mit der Schnecke 19 gelagert und mit einer Schraube 29 und einer zwischengelegten Stützscheibe 30 befestigt, wobei es gegen die Rückseite der Lochscheibe 24 gespannt ist und die Vorspannkraft durch das Anzugsmoment der Schraube 29 einstellbar ist. Hinter dem Schneidmessersatz 21 ist ein Ableitungsrohr 31 angebracht, das in einen Aufnahmebehälter 32 für zerkleinertes Pflanzenmaterial mündet.

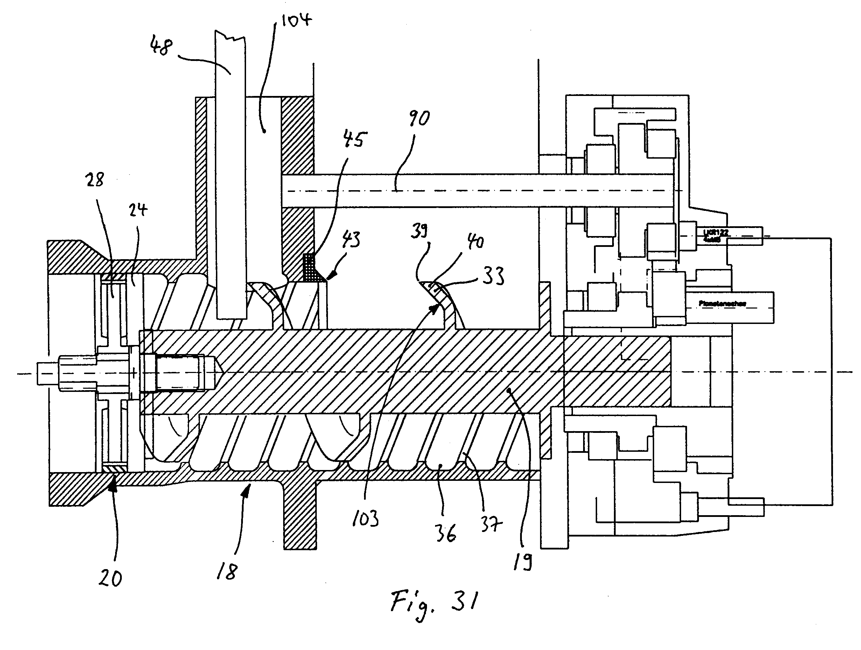

Die Verdichterschnecke 19, die ein- oder mehrgängig sein kann, ist im Verdichtergehäuse 3 derart eingepaßt (siehe Fig. 12), daß zwischen ihrem Schneckenumfang 33, das heißt dem Schneckenkopf, und der Innenseite 34 der Gehäusewand lediglich ein minimierter Spalt 35 verbleibt. Auf der Innenseite 34 der Gehäusewand sind mehrere wendelförmige Vertiefungen oder Nuten 36 ausgebildet, deren Steigungsrichtung zu der Steigungsrichtung der Verdichterschnecke 19 entgegengesetzt ist. Die zwischen den Nuten 36 verbleibenden Stege 37 können scharfe Kanten 38 aufweisen, die Gegenschneiden bilden für den ebenfalls mit einer scharfen Kante 39 versehenen Steg 40 am Schneckenkopf 33 der Verdichterschnecke 19. Die dadurch gebildete Schneide an der Verdichterschnecke 19 kann spitzwinklig ausgebildet sein, indem der Steg 40 im Bereich der Schneidkante 39 auf der Verdichterseite vertieft oder ausgehöhlt ist (siehe Aushöhlung 41 in Fig. 12 sowie Schneckengestaltung in Fig. 31). Das Verhältnis der Breite des Steges 37 zur Breite der Nut 36 in axialer Richtung beträgt in bevorzugter Gestaltung etwa 1:3.

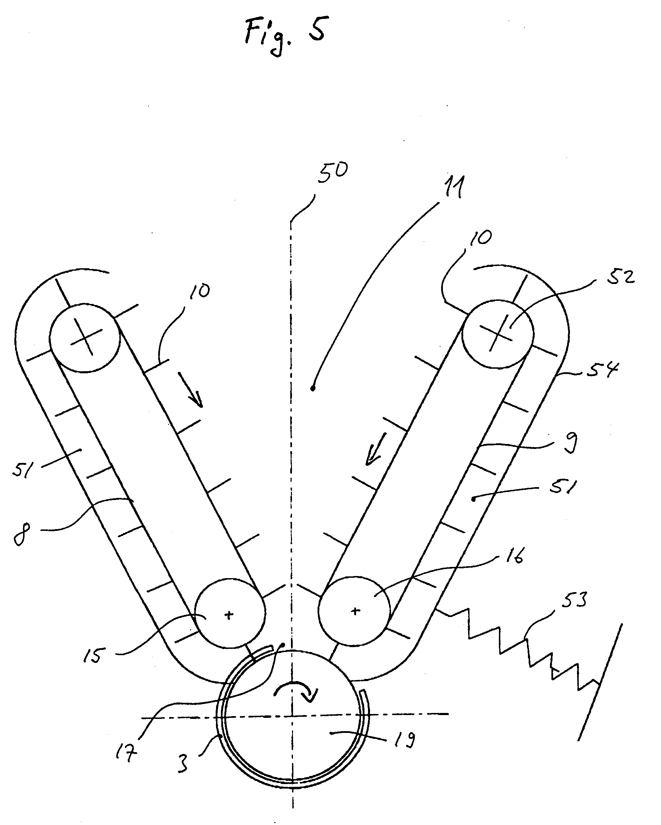

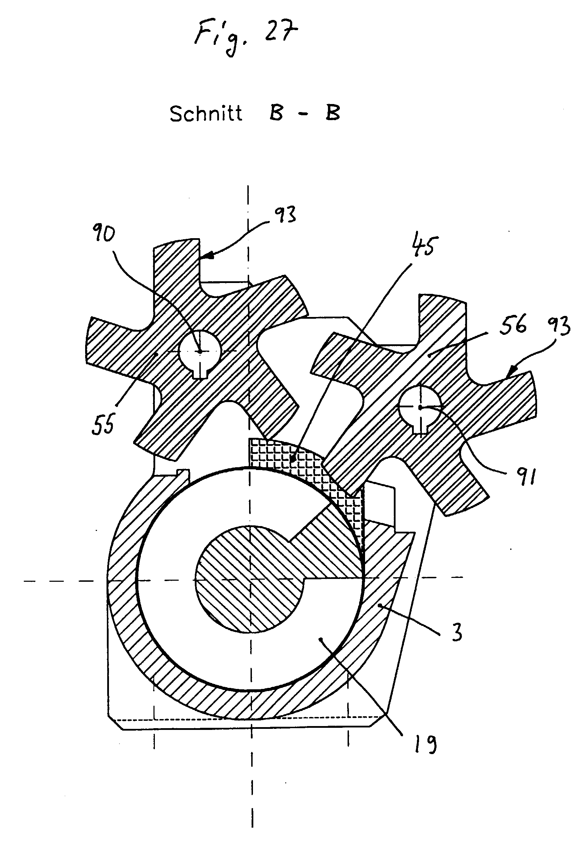

An einem die Einfüllöffnung 17 zur Verdichterschnecke 19 begrenzenden, in Förderrichtung vorderen Rand 42 (siehe Fig. 4) des Verdichtergehäuses 3 ist eine Schneide 43 angebracht oder ausgeformt, die eine Gegenschneide für die Schneide 39 am Schneckenkopf 33 bildet. Damit lassen sich feste Pflanzenteile wie Äste 48 oder Zweige oder dergleichen vorzerkleinern. Die Schneide kann auch an einer am Gehäuse befestigten Schneidplatte 45 (siehe Fig. 27) ausgebildet sein.

Die Lochscheibe 24 enthält eine Vielzahl von Öffnungen oder Löchern 44 für den axialen Durchtritt des verdichteten Pflanzenmaterials. Jedes Loch 44 hat einen scharfkantigen Rand, der eine Gegenschneide für die Schneide 23 der rotierenden Schneidplatte 22 bildet. Eine Vielzahl von Löchern 44 bedeutet also eine Vielzahl von Schneiden, die das verdichtete Pflanzenmaterial feiner zerschneiden und damit die Zellstruktur für eine spätere Kompostierung besser aufschließen.

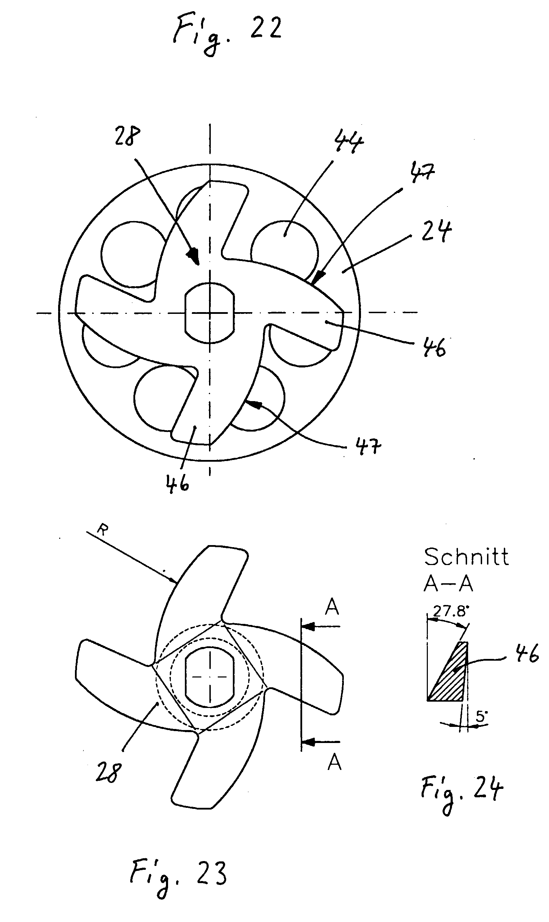

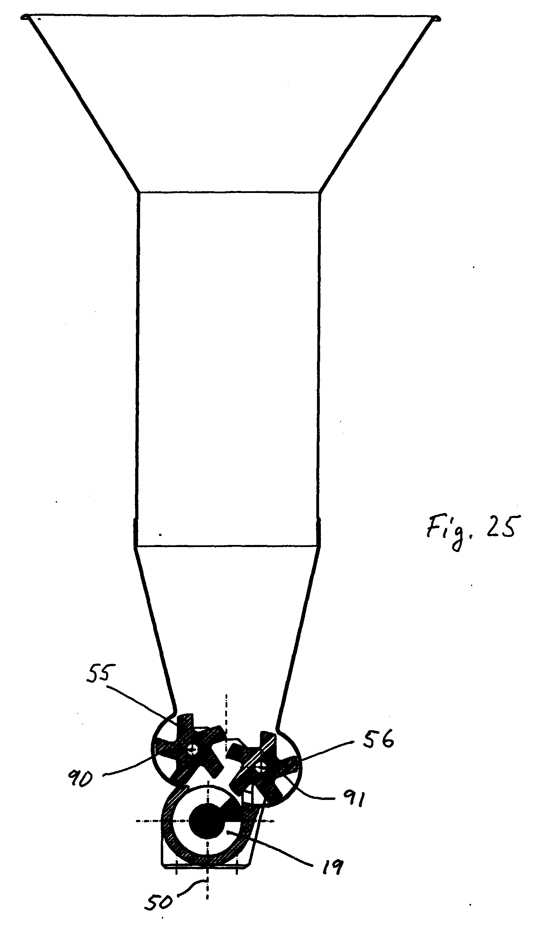

In den Figuren 22 bis 24 ist ein weiteres Ausführungsbeispiel eines Schneidmessers 28 dargestellt. Dieses enthält vier Flügel 46, wobei die Schneidkante 47 jedes Flügels 46 Sichel- oder Evolventenform aufweist. Damit ist gewährleistet, daß die Schneidkante 47 einen ziehenden Schnitt mit einer Relativbewegung an dem durch ein Loch 44 hindurchgedrückten Pflanzenmaterial ausführt. Dadurch wird die Schnittkraft und das Schneidgeräusch reduziert. Durch den Freiwinkel von beispielsweise 5° an der Schneide 47 (siehe Fig. 24) ergibt sich ein Selbstschärfungseffekt der Schneidkante 47 an der Lochscheibe 24.

Nachfolgend werden mehrere Ausführungsbeispiele für die Gestaltung der Fördermittel 8, 9 der Fördereinrichtung 5 beschrieben. Das in Fig. 5 dargestellte Ausführungsbeispiel enthält zwei sich gegenüberliegende ketten- oder bandförmige Fördermittel 8, 9 mit hervorstehenden Förderprofilen 10 und einer Bewegungsrichtung gemäß Pfeildarstellung. Eine Aussparung im Gehäuse 3 für die Einfüllöffnung 17 liegt nicht symmetrisch zu einer Vertikalen 50 durch die Verdichterschnecke 19, sondern ist gemäß der Darstellung in Drehrichtung der Schnecke 19 erweitert. Somit wird das Pflanzenmaterial in Drehrichtung der Schnecke 19 zugeführt, wodurch sich ein besserer, gleichmäßigerer Materialfluß ergibt. Wird durch die Fördermittel 8, 9 mehr Pflanzenmaterial zugeführt, als von der Verdichterschnecke 19 aufgenommen und abtransportiert werden kann, so wird dieses auf der Außenseite 51 des jeweiligen Fördermittels 8, 9 nach oben mitgenommen und erneut wieder in den Förderkanal 11 gebracht. In dem Ausführungsbeispiel sind die unteren Antriebs- und Umlenkrollen 15, 16 nahe zueinander positioniert, so daß eine wirksame Förderung im unteren verengten Bereich des Förderkanals 11 gewährleistet ist.

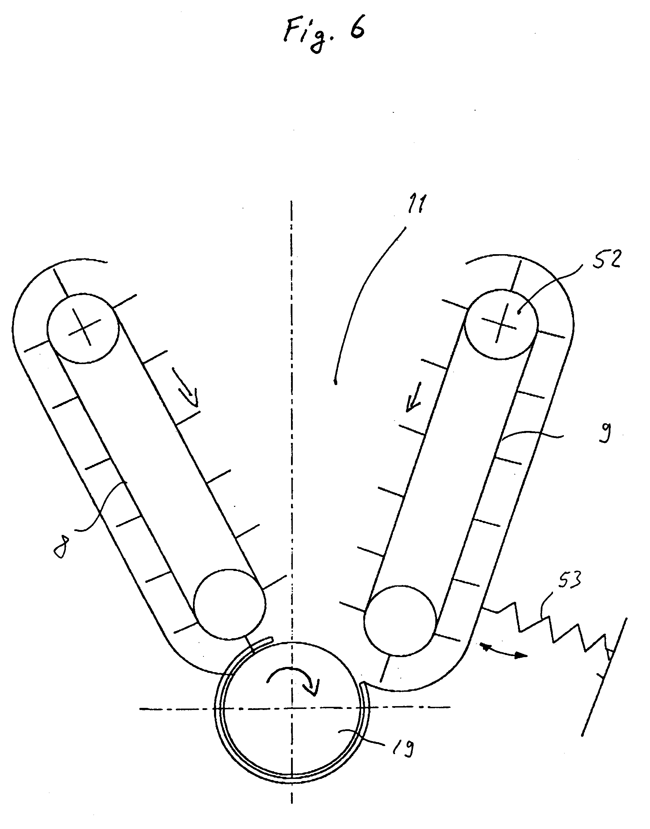

Das in der Fig. 5 rechte band- oder kettenförmige Fördermittel 9 kann derart beweglich gelagert sein, daß es insbesondere im unteren Bereich ausweichen und damit den Querschnitt des Förderkanals 11 erweitern kann, wenn ein sperriges und hartes Pflanzenteil zugeführt wird und sich zwischen den Förderprofilen 10 zu verklemmen droht, wodurch die Fördereinrichtung 5 blockiert werden könnte. Das rechte Fördermittel 9 kann hierfür z. B. um seine obere Umlenkwalze oder -rolle 52 schwenkbar gelagert sein und sich gegen die Kraft einer Federeinrichtung 53 oder eines vergleichbaren elastischen Elements zusammen mit seiner Außenabdeckung 54 verlagern, so daß der Querschnitt des Förderkanals 11 vorübergehend erweitert wird. Eine solche Position zeigt Fig. 6. In dieser Darstellung ist gut erkennbar, daß das Pflanzenmaterial in Drehrichtung der Verdichterschnecke 19 zugeführt wird.

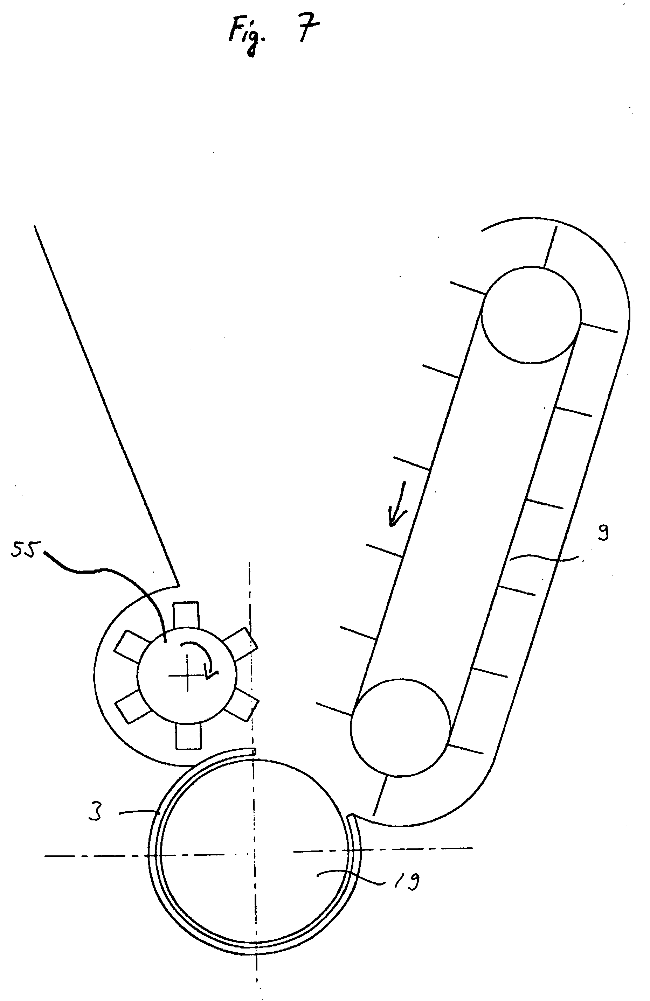

Fig. 7 zeigt eine Fördereinrichtung 5 mit dem schon beschriebenen rechten ketten- oder bandförmigen Fördermittel 9 sowie mit einer Häckselwalze 55, die anstelle der unteren Umlenkrolle 15 des zuvor beschriebenen linken Fördermittels 8 angeordnet ist. Die Häckselwalze 55 kann das Pflanzenmaterial sowohl fördern als auch zerkleinern. Statt der Häckselwalze kann alternativ auch eine Transportwalze mit Förderprofilen, jedoch ohne Häckselmesser verwendet werden.

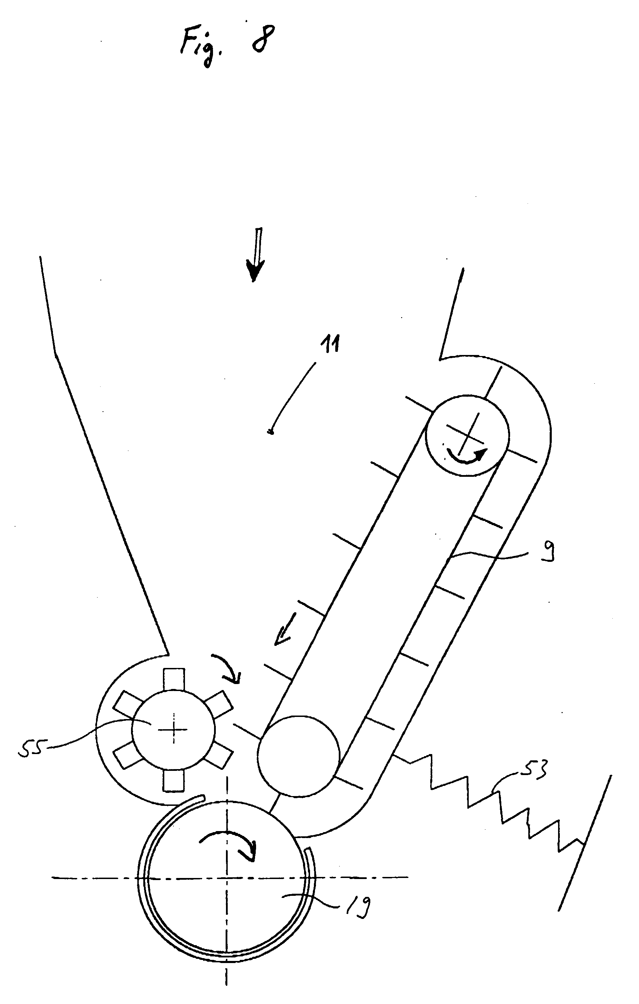

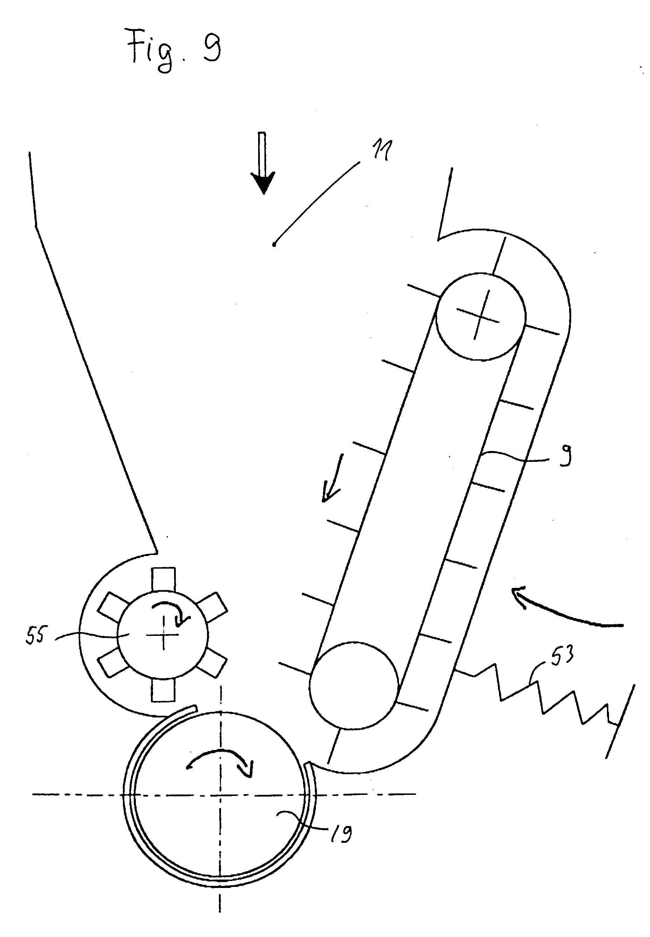

Das Ausführungsbeispiel der Fig. 8 ist eine Abwandlung der Fördereinrichtung der Fig. 7, wobei das rechte Fördermittel 9 in der schon beschriebenen Art verschwenkbar gelagert ist. In Fig. 9 ist das rechte Fördermittel 9 in einer nach außen geschwenkten Position dargestellt.

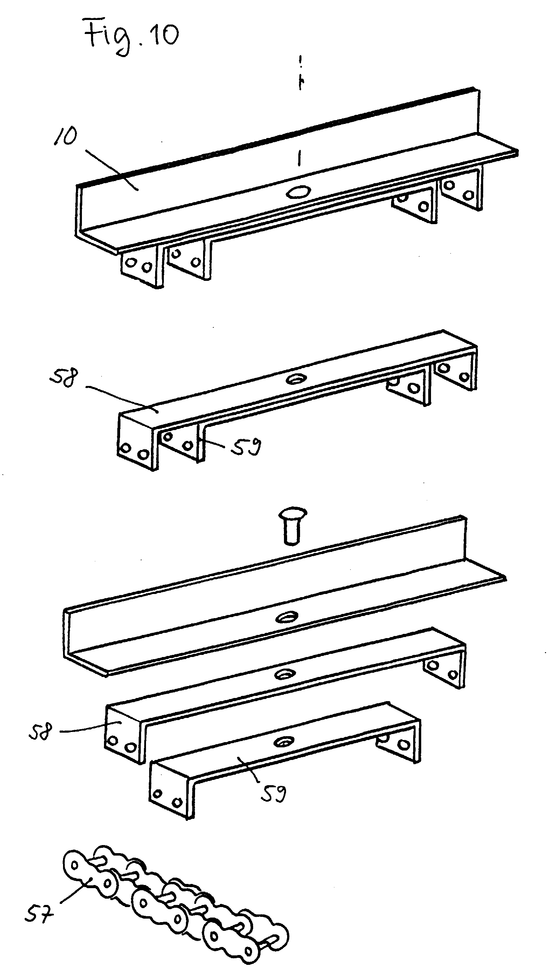

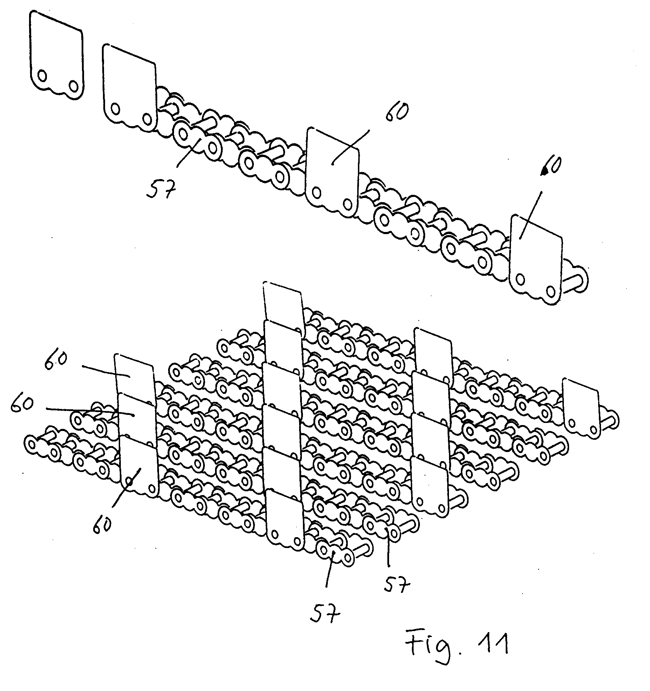

Das Fördermittel 8, 9 kann einen umlaufenden Kettentrieb (siehe Fig. 10 und 11) mit daran befestigten verschleißfesten Förderprofilen 10 (z. B. aus Edelstahl) aufweisen, wobei eine Kette 57 oder mehrere nebeneinanderliegende Ketten verwendet werden können, an der bzw. denen die Förderprofile 10 befestigt ist bzw. sind, die z. B. mit zwei Halteteilen 58 und 59 zusammengesetzt sein können. Ein Kettentrieb mit einer Vielzahl nebeneinander angeordneter Ketten 57 ist in Fig. 11 dargestellt. An jeder Kette 57 sind einzelne hervorstehende Bleche 60 oder ähnliche Elemente als Förderprofile voneinander beabstandet befestigt. Die Ketten 57 sind jeweils zueinander versetzt montiert, so daß sich die dargestellte versetzte Anordnung der Förderprofile 60 ergibt, die eine besonders wirksame Förderung von unterschiedlichem Pflanzenmaterial gestattet.

Das rechte und das linke Fördermittel 8 bzw. 9 können mit übereinstimmender und veränderbarer Bewegungs- oder Rotationsgeschwindigkeit betrieben werden. Gemäß einem abgewandelten Ausführungsbeispiel können die Geschwindigkeiten der beiden Fördermittel 8, 9 unterschiedlich einstellbar sein, so daß eine Relativbewegung der beiden Fördermittel 8, 9 eine Vorzerkleinerung des eingefüllten Pflanzenmaterials bewirken kann.

Ein weiteres Ausführungsbeispiel der Fördermittel ist in den Fig. 25 bis 27 dargestellt. Die beiden Fördermittel sind als gegenläufige Häckselwalzen 55, 56 ausgebildet. Die Drehachse 90 der linken Häckselwalze 55 ist näher zu einer senkrechten Ebene 50 durch die Rotationsachse der Förderschnecke 19 wie die Drehachse 91 der rechten Häckselwalze 56, und sie ist oberhalb der Drehachse 91 der rechten Häckselwalze 56 angeordnet. Die Kopfkreislinien der beiden Häckselwalzen 55, 56 berühren sich. Auf diese Weise ergibt sich eine Pflanzenzufuhr außermittig in Drehrichtung der Förderschnecke 19. Die beiden Häckselwalzen 55, 56 können beispielsweise mit 40 bzw. 60 Umdrehungen pro Minute angetrieben werden, wobei die Drehzahl den Füllgrad der Förderschnecke 19 steuert und sie zu diesem Zweck einstellbar sein kann. Durch die unterschiedliche Drehzahl der beiden Häckselwalzen 55, 56 kann eine Vorzerkleinerung des zugeführten Pflanzenmaterials erfolgen. Die Drehachsen 90, 91 der beiden Häckselwalzen 55 bzw. 56 können positionsfest oder alternativ kann auch zumindest eine Drehachse federbelastet positioniert sein, so daß z. B. besonders harte Äste die beiden Häckselwalzen 55, 56 um ein gewisses Maß auseinanderdrücken können und der maximal verarbeitbare Astdurchmesser vergrößert wird.

In einer vorzugsweisen Ausgestaltung der Erfindung können die Häckselwalzen 55, 56 Häckselmesser 92 aufweisen (Fig. 27), deren Schneidkanten 93 in etwa radial zur jeweiligen Drehachse 90 bzw. 91 verlaufen. Durch diese Gestaltung wird die Tendenz von zu schneidendem Material, an der Schneidkante 93 nach außen hin abzugleiten und auszuweichen, deutlich reduziert. Dieser Gleiteffekt kann noch weiter reduziert werden, wenn der äußere Schneidkantenbereich am Umfang gegenüber dem inneren Schneidkantenbereich in Bewegungsrichtung vorversetzt und z. B. sichelförmig ausgebildet ist.

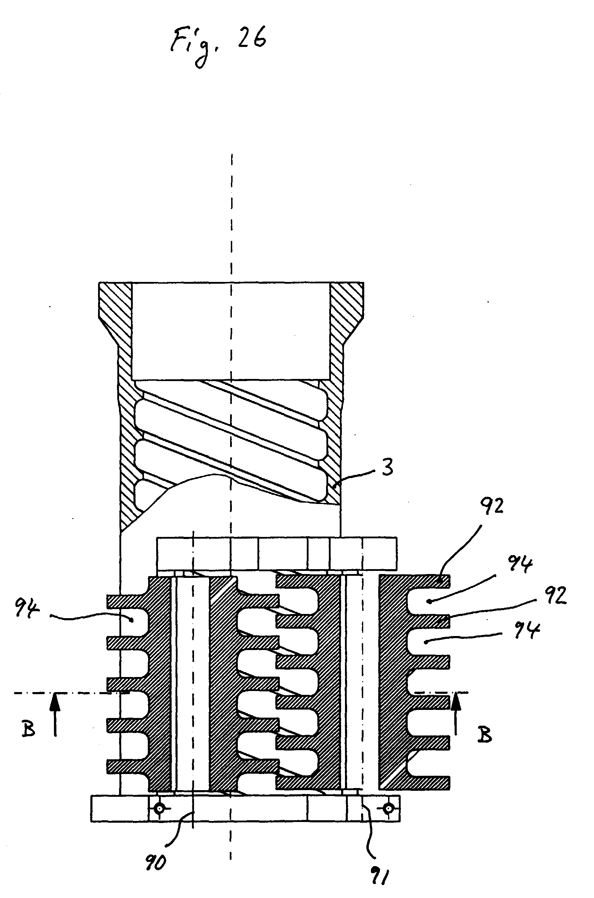

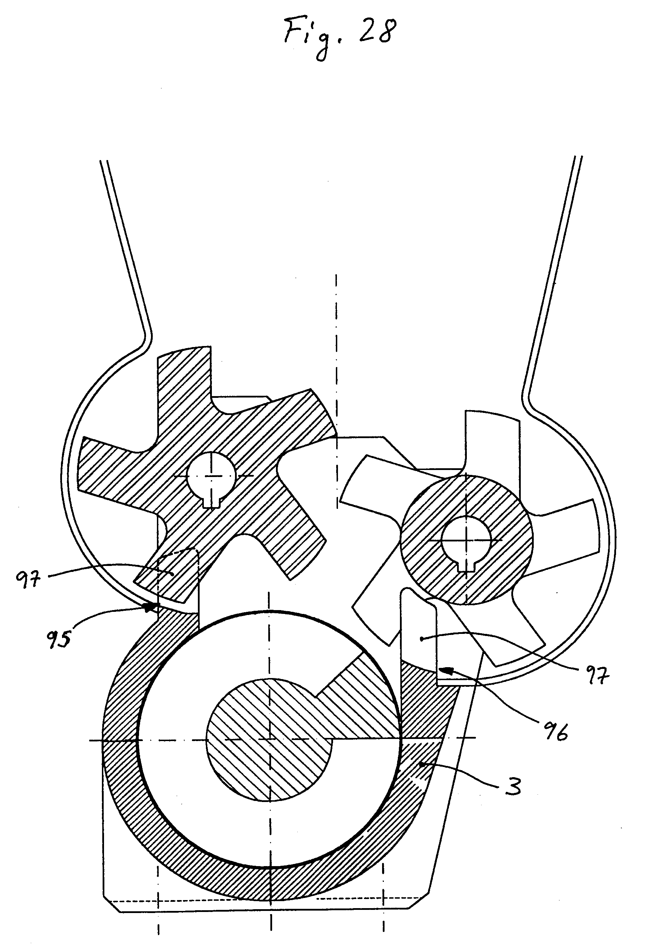

Um ein Verkleben oder Zusetzen der Zwischenräume 94 zwischen den axial beabstandeten Häckselmessern 92 (siehe Fig. 26) zu verhindern, ist gemäß einem weiteren Ausführungsbeispiel der Erfindung für jede Häckselwalze 55, 56 ein Reinigungskamm 95 bzw. 96 vorgesehen (Fig. 28). Diese Kämme 95, 96 sind beispielsweise am Gehäuse 3 der Förderschnecke 19 angebracht oder einstückig mit diesem ausgebildet. Die Zinken 97 jedes Kammes erstrecken sich in die axialen Zwischenräume 94 der Häckselmesser 55, 56, so daß die Zinken 97 sich zwischen den Häckselmessern 92 ablagerndes Material abstreifen und zur Förderschnecke 19 leiten.

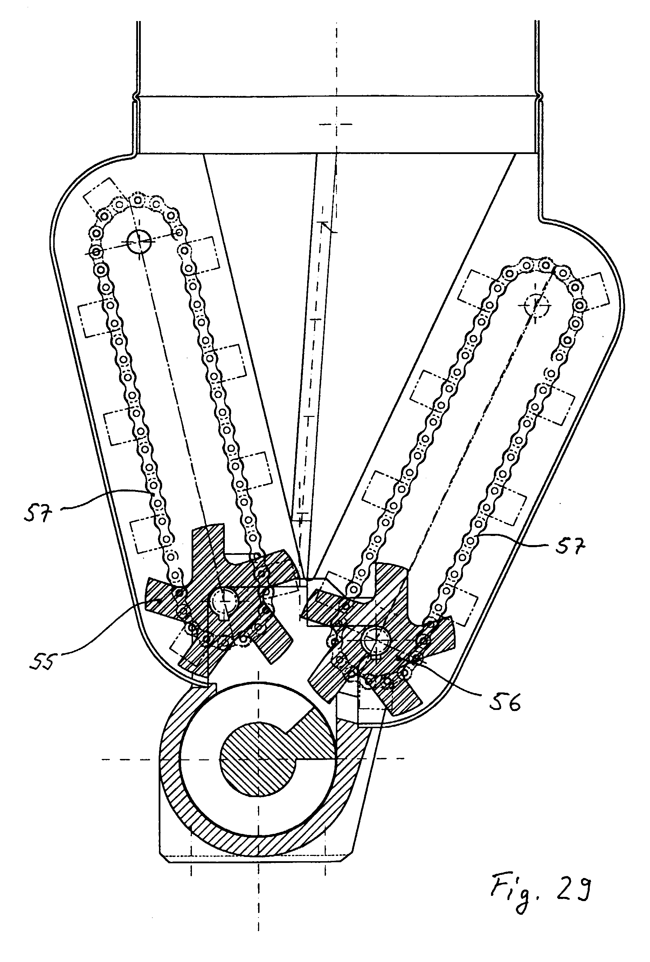

In dem in Fig. 29 dargestellten Ausführungsbeispiel sind die Fördermittel 8, 9 eine Kombination aus Häckselwalzen 55, 56 und Förderketten 57, wie sie in den vorangegangenen Beispielen schon beschrieben worden sind. Die jeweilige Förderkette 57 kann mit der Umlaufgeschwindigkeit der Häckselwalze 55 bzw. 56 oder mit davon abweichender Geschwindigkeit betrieben werden. Beliebige weitere Kombinationen mit an das jeweilige Pflanzenmaterial anpaßbaren Bewegungs- oder Rotationsgeschwindigkeiten der Fördermittel können vorgesehen sein.

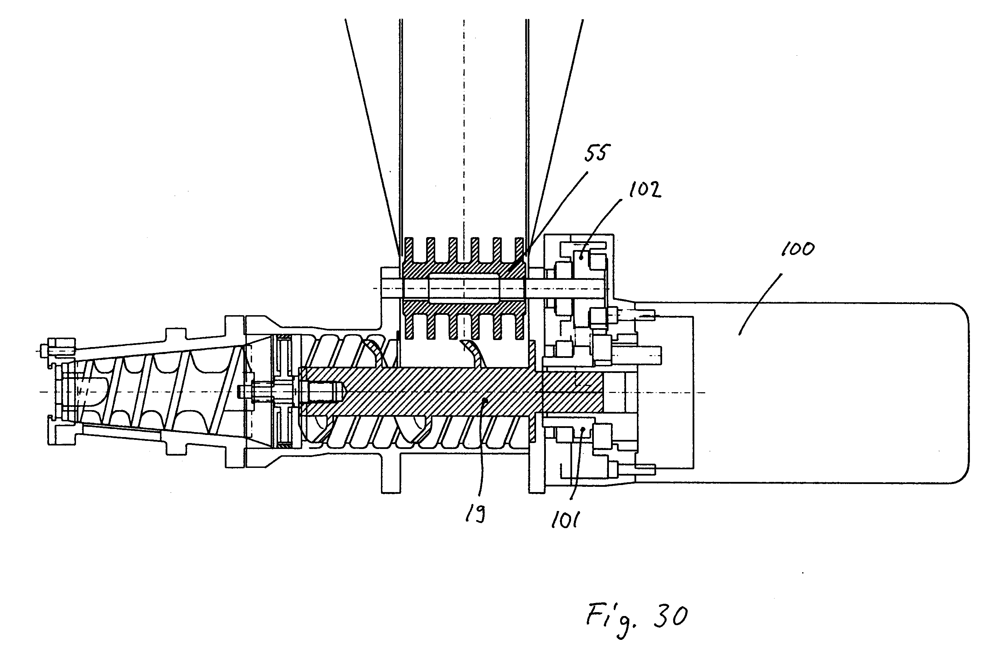

Eine teilweise geschnittene Gesamtansicht einer erfindungsgemäßen Vorrichtung zeigt Fig. 30. Ein Antriebsmotor 100 mit Planetengetriebe treibt sowohl die Förder- oder Verdichterschnecke 19 als auch die oberhalb der Förderschnecke 19 liegende Häckselwalze 55 sowie die nicht dargestellte Häckselwalze 56 (oder andere Fördermittel) über Stirnradgetriebe 101, 102 mit gegenüber der Motordrehzahl reduzierter Drehzahl an. Die hier dargestellte Förderschnecke 19 weist einen Schneckenkopf 40 auf (siehe vergrößerte Darstellung in Fig. 31), der am Umfang in axialer Förderrichtung deutlich vorversetzt ist und damit eine spitzwinklige Schneidkante 39 bildet, die einen Winkel von weniger als 45° aufweisen kann. Das geschnittene Material kann behinderungsfrei auf der Schneckeninnenwand 103 abgleiten, nachdem es im Zusammenwirken der Schneidkante 39 der Schnecke 19 und der Gegenschneide 43 am Gehäuse 3 geschnitten worden ist. Diese Gestaltung reduziert die jeweils erforderliche Schnittkraft.

Eine vergrößerte Darstellung einer derartigen Förder- und Verdichterschnecke zeigt Fig. 31 (die Häckselwalzen sind nicht gezeigt), wobei am Gehäuse 3 der Verdichterschnecke 19 eine zusätzliche Zuführung 104 als radialer Kanal für stangenförmiges Material wie Äste 48 vorgesehen ist. Auch hier kann der Übergang der Zuführung 104 zum Gehäuseinnenraum der Verdichterschnecke 19 scharfkantig oder mit einer speziell ausgebildeten Schneide versehen sein (nicht dargestellt), um als Gegenschneide beim Abtrennen eines Astes 48 zu wirken. Die dargestellte Förder- oder Verdichterschnecke 19 weist eine konstante Steigung und einen Kern mit konstantem Durchmesser auf und eignet sich damit insbesondere für Holz oder vergleichbares hartes Material, das nur wenig komprimiert werden kann.

Bei dem dargestellten Ausführungsbeispiel hat die Verdichterschnecke 19 einen Außendurchmesser von 79 mm und einen Steigungswinkel am Außenumfang von etwa 17°. Der Steigungswinkel der in der Art einer Nut gebildeten wendelförmigen Vertiefung 36 im Gehäuse beträgt etwa 21°, so daß der tatsächliche Schneidwinkel zwischen der Verdichterschnecke 19 und den Gehäusestegen 37 etwa 38° beträgt, wodurch sich ein leistungsreduzierter Schnittbetrieb ergibt.

Die erfindungsgemäße Vorrichtung kann eine Dehydratisierungseinrichtung 61 aufweisen (siehe Fig. 13). Diese schließt sich an die Schneidmessereinheit 21 an und weist eine mit der Verdichterschnecke 19 der Verdichtereinrichtung 18 rotatorisch gekoppelte Pressschnecke 62 auf. Diese hat einen in Förderrichtung abnehmenden Durchmesser, so daß das kleingeschnittene Pflanzenmaterial zunehmend verdichtet wird, wobei seine Feuchtigkeit oder Flüssigkeit ausgepreßt wird und durch siebartige Öffnungen 63 in einer Gehäusewand 64 der Dehydratisierungseinrichtung 61 austreten kann. Der verbleibende weitgehend trockene pflanzliche Feststoff 65 tritt axial durch Öffnungen 66 am Gehäuseende 67 aus. Die Dehydratisierungseinrichtung 61 kann als Aufsteckeinheit zum schnell auswechselbaren Anbringen an dem Verdichtergehäuse 3 ausgebildet sein. Je nach Feuchtegehalt des Pflanzenmaterials und gewünschtem Feuchtegehalt des pflanzlichen Feststoffes kann eine Pressschnecke 62 bzw. eine Dehydratisierungseinrichtung 61 mit unterschiedlicher, z. B. durch die Schneckengeometrie vorwählbarer Presskraft verwendet werden. Daher kann auch sehr feuchtes Pflanzenmaterial und Grünmaterial verarbeitet werden und in einen für eine Kompostierung zweckmäßigen Zustand mit z. B. 25 - 35% Restfeuchtegehalt gebracht werden. Die siebartigen Öffnungen 63 können auch in einem Lochblech enthalten sein, das eine große Austrittsöffnung im Gehäuse 64 bedeckt. Das Lochblech kann zur leichteren Reinigung herausnehmbar sein.

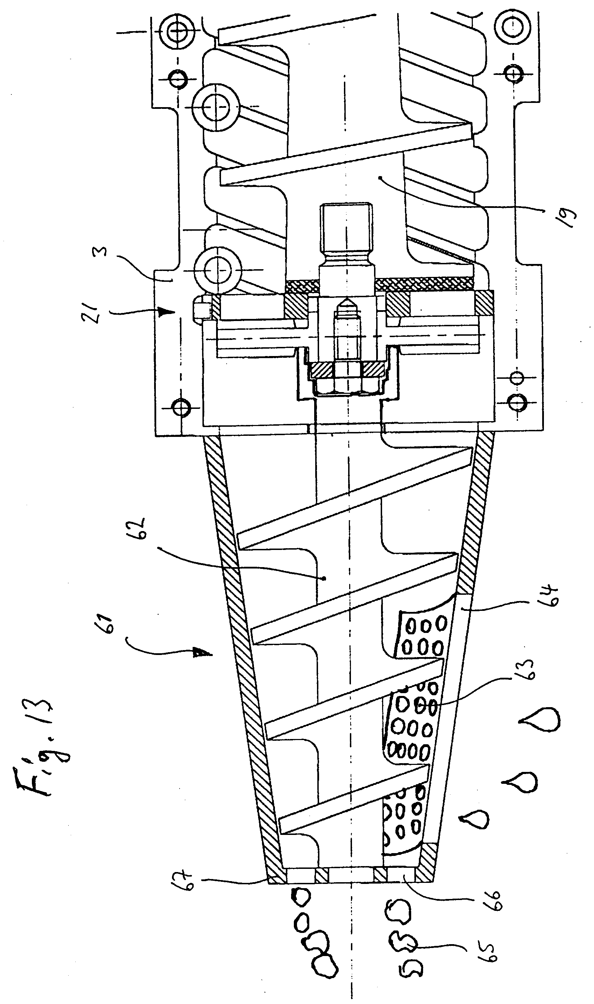

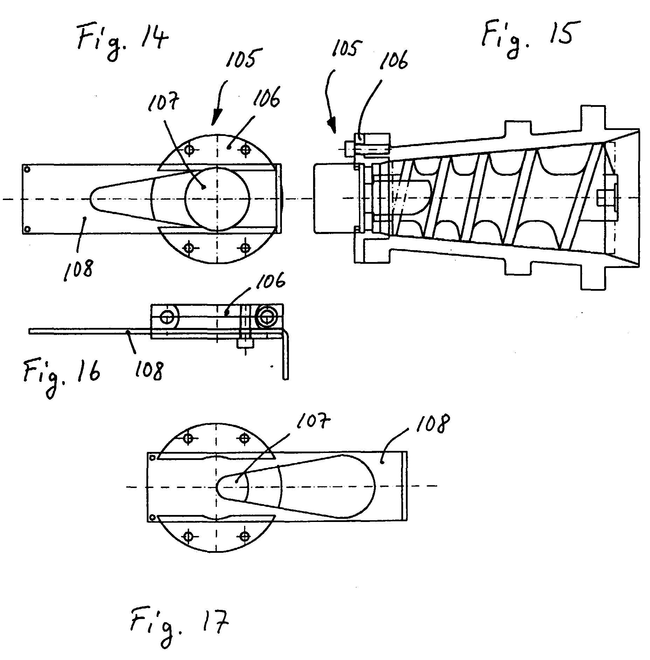

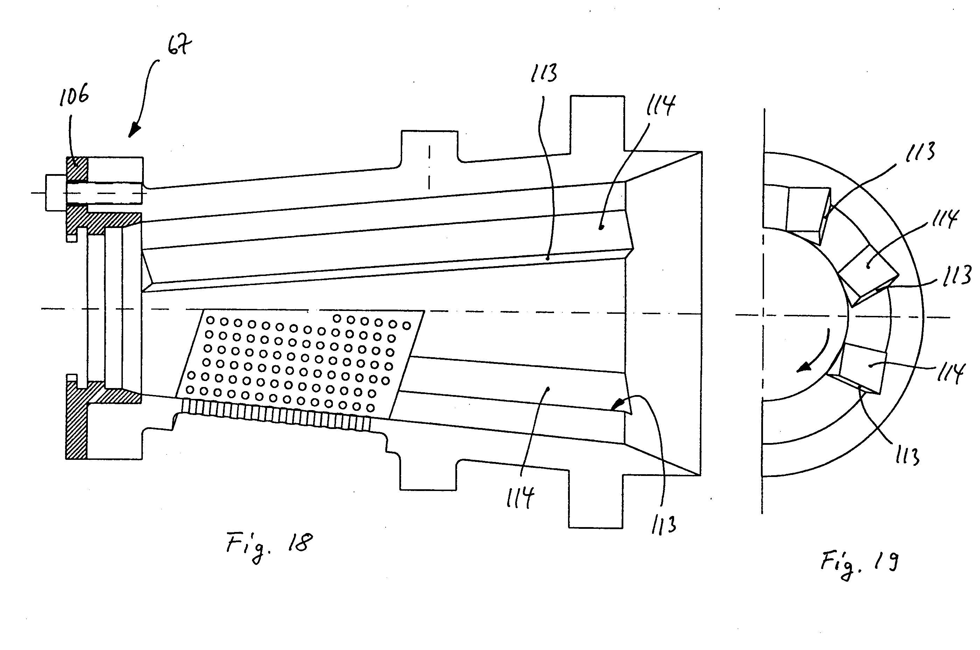

Am Gehäuseende 67 der Dehydratisierungseinrichtung 61 kann eine Schieberblende 105 angebracht sein (siehe Fig. 14 bis 17), mit der der Gegendruck und somit die Presskraft auf das Pflanzenmaterial eingestellt werden kann. Die Schieberblende 105 enthält ein Flanschteil 106, an dem sie verschiebbar gelagert ist und mit dem die Schieberblende 105 an dem Gehäuseende 67 befestigt ist. Das Flanschteil 106 besitzt für den Austritt des gepreßten Pflanzenmaterials eine zentrale Öffnung 107, deren freie Querschnittsfläche mit einer an dem Flanschteil 106 verschiebbar gelagerten Blendenregulierung 108 eingestellt werden kann, indem die Blendenregulierung 108 radial in unterschiedliche Positionen verschoben wird, in denen sie durch eine Rastung (nicht dargestellt) festlegbar ist. Die Fig. 14 und 17 zeigen einen minimalen bzw. einen maximalen freien Querschnitt der Öffnung 107.

In Fig. 18 und 19 ist eine Gehäuseinnenseite 110 der Dehydratisierungseinrichtung 61 dargestellt, in der eine Leiteinrichtung 111 in Form von Gegenzügen ausgebildet ist, die als lineare Vertiefungen 112 in der Gehäusewand 64 ausgebildet sind. Die Vertiefungen 112 weisen eine zur Drehrichtung (siehe Pfeil in Fig. 19) nahezu senkrechte Seitenwand 113 und eine flache Seitenwand 114 auf, so daß sich das Pflanzenmaterial an der Seitenwand 113 abstützen kann und an einer Rotation gehindert wird. Am Gehäuseende 67 ist der Flansch 106 für die Schieberblende 105 angebracht.

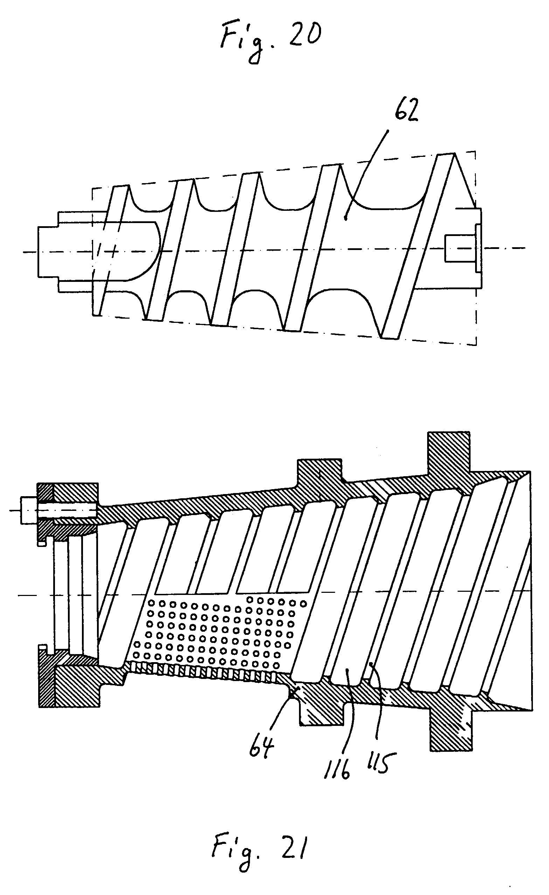

Zur Vermeidung einer durch die Preßschnecke 62 aufgeprägten rotatorischen Bewegung des Pflanzenmaterials kann das Gehäuse 64 (siehe Fig. 21) in zum Verdichtergehäuse 3 vergleichbarer Weise nach innen hervorstehende schraubenförmig angeordnete, ein- oder mehrgängige Rippen oder Stege 115 als Gegenzug aufweisen, die dazwischenliegende vertiefte Bereiche oder wendelförmige Nuten 116 aufweist, in denen sich das Pflanzenmaterial zur Vermeidung oder Verminderung einer Rotation abstützen kann. Das Verhältnis der Breite des Steges 115 zur Breite der Nut 116 kann auch hier vorzugsweise 1:3 betragen. Die zugeordnete Preßschnecke 62 ist in Fig. 20 dargestellt. Sie kann eine gleichmäßige oder eine zunehmende Steigung aufweisen.

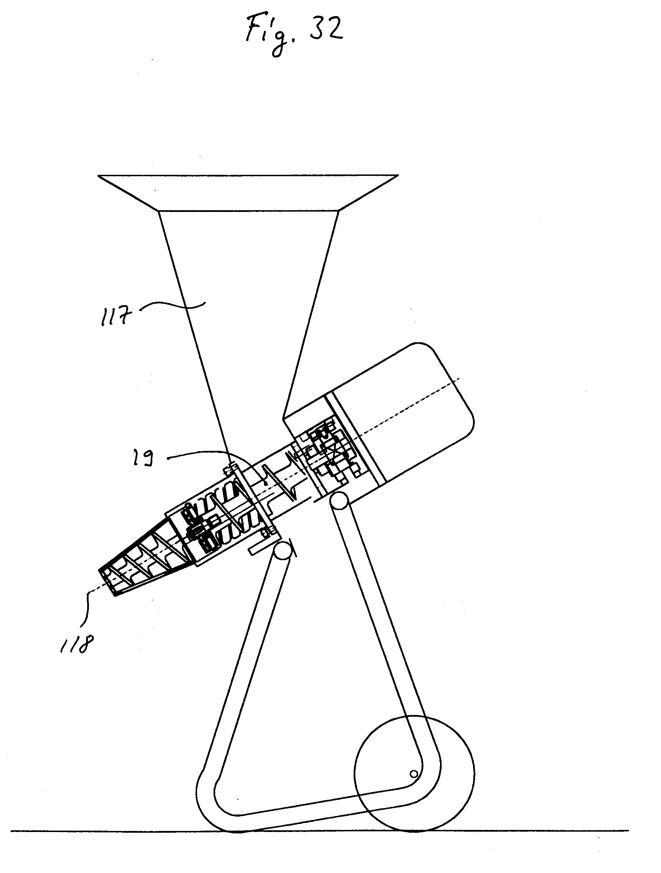

Fig. 32 zeigt ein Ausführungsbeispiel der erfindungsgemäßen Vorrichtung, die statt einer aktiv betriebenen Fördereinrichtung lediglich eine insbesondere trichterförmige Zuführung 117 für das zu verarbeitende Pflanzenmaterial aufweist. Bei dieser einfachen Ausgestaltung rutscht das in den Trichter 117 zugegebene Material schwerkraftbedingt zu der Verdichterschnecke 19. Insbesondere bei Gehölz und strauchigem Material, das von Hand zugeführt wird, kann auf eine Zwangszuführung verzichtet werden. Alle bisher beschriebenen Ausführungsbeispiele können vergleichbar der in Fig. 32 dargestellten Anordnung mit abwärts geneigter Rotationsachse 118 der Verdichterschnecke 19 aufgestellt werden, so daß sowohl das entfeuchtete Material wie auch die ausgepreßte Flüssigkeit schwerkraftunterstützt aus der Vorrichtung abgeführt wird.

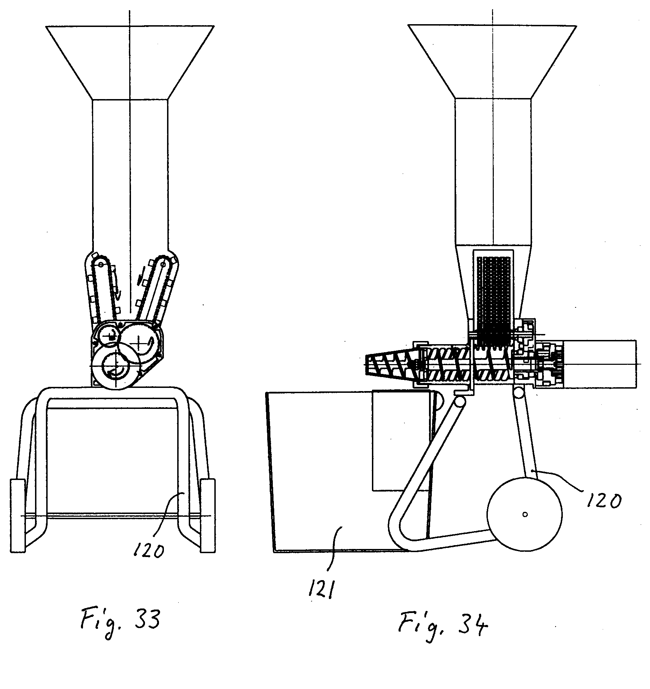

In den Figuren 33 und 34 ist ein Ausführungsbeispiel der erfindungsgemäßen Vorrichtung mit einem verfahrbaren Ständer 120 und einem zugeordneten Behälter 121 für festes Pflanzenmaterial und für ausgepreßte Flüssigkeit dargestellt. Die Vorrichtung weist einen Zuführkanal mit einer Zwangsbefülleinrichtung mit Förderketten und Häckselwalzen auf und eignet sich insbesondere für Weichgut-Pflanzenmaterial.

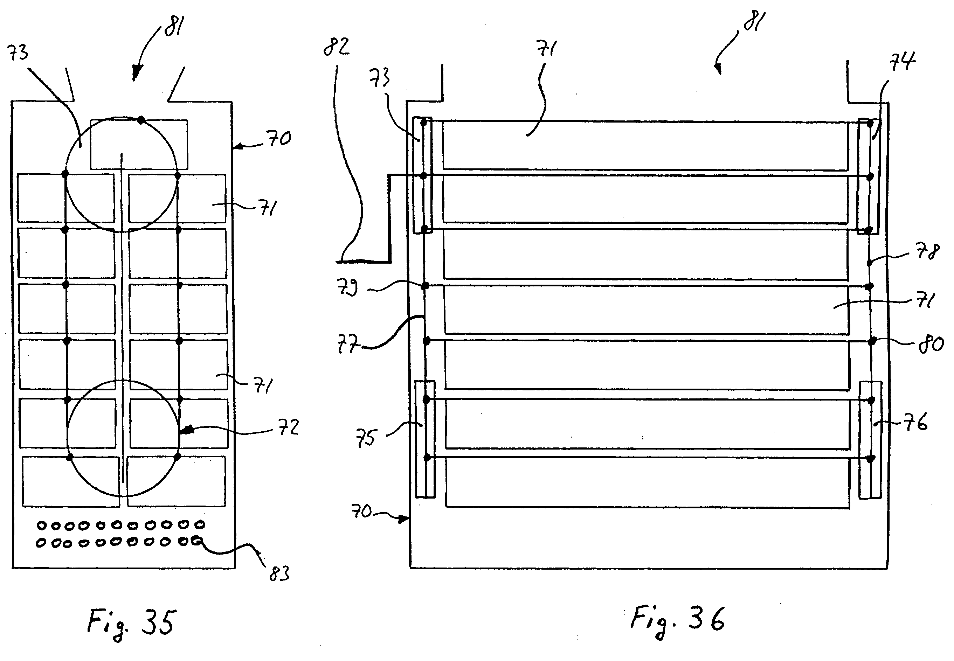

Ein Ausführungsbeispiel einer erfindungsgemäßen Kompostiervorrichtung ist in den Fig. 35 und 36 prinzipiell dargestellt. Die Kompostiervorrichtung enthält ein Gehäuse 70, in dem eine Vielzahl von Kompostbehältern 71 aufgenommen sind. Eine im Gehäuse 70 angeordnete Umlauffördereinrichtung 72 in der Art eines Paternosters enthält ein oberes und ein unteres Räderpaar mit jeweils rotatorisch gekoppelten koaxialen Rädern 73 und 74 bzw. 75 und 76. Eine jeweilige Zug- oder Tragkette 77 bzw. 78 läuft über die Räder 73, 75 bzw. 74, 76. An jeder Kette 77, 78 sind Halteeinrichtungen 79, 80 in regelmäßigen Abständen angebracht, die die Kompostbehälter 71 in der Art einer Paternosterlagerung derart lagern, daß sie auch bei einer Umlaufbewegung immer horizontal mit nach oben offener Befüllseite ausgerichtet sind. Durch einen an der Oberseite des Gehäuses 70 vorgesehenen Einfülltrichter 81 kann das für die Kompostierung z. B. durch die oben beschriebene Vorrichtung vorbereitete Pflanzenmaterial in einen Kompostbehälter 71 eingefüllt werden. Mittels einer Handkurbel 82 oder eines motorischen Antriebes können die Kompostbehälter 71 umlaufend bewegt werden und an die Einfüllöffnung bzw. den Einfülltrichter 81 gebracht werden. Die Einfüllöffnung 81 ist verschließbar, so daß ein Nässezutritt bei Regenfall an die Kompostiermasse ausgeschlossen ist. Eine übermäßige Durchfeuchtung, die den Kompostierprozess behindern könnte, sowie schädliche Sickersäfte werden somit vermieden.

Die für den Rotte- oder Kompostierprozess erforderlichen Mikroorganismen, die bei stationären Kompostmieten aus dem Erdreich in die Pflanzenmasse gelangen, werden hier durch Zusatz von Kompostbeschleunigern zugeführt. Für eine ausreichende Belüftung der Kompostiervorrichtung sind Öffnungen 83 zumindest im Bodenbereich des Gehäuses 70 vorgesehen.

Nach Beendigung des Rotte- oder Kompostierprozesses in einem Kompostierbehälter 71 kann der darin enthaltene Kompost entnommen werden, wenn der Kompostbehälter 71 in der oberen Position unterhalb der Einfüllöffnung 81 angeordnet ist. Alternativ kann der Kompostbehälter 71 aus dem Gehäuse 70 entnommen werden, wobei dann der Kompost z. B. aus dem Behälter 71 gekippt werden kann. Zum Entnehmen eines Behälters 71 kann eine seitliche Öffnung (nicht dargestellt) in dem Gehäuse 70 vorgesehen sein, durch die ein Behälter 71 nach Entnahme von der Kette 77, 78 und mit einer Führung an Schienen herausbewegt werden kann. Als weitere Alternative können die Behälter 71 einen Schiebe- oder Klappboden (nicht dargestellt) aufweisen, so daß in einer unteren Position des Kompostbehälters 71 durch Öffnung des Bodens der Kompost entnommen werden kann, indem er z. B. in eine darunter gestellte Schubkarre oder ein ähnliches Transportmittel fällt. Durch die Bewegbarkeit der einzelnen Kompostbehälter entfällt somit das ansonsten erforderliche Umstechen des Komposthaufens, um an den untenliegenden fertigen Kompost zu gelangen.

Für größeren Kompostanfall kann der Förder- oder Bewegungsweg verlängert werden, so daß eine größere Anzahl Kompostbehälter in einem Gehäuse untergebracht werden können. So kann der Bewegungsweg schleifenförmig angeordnet sein.

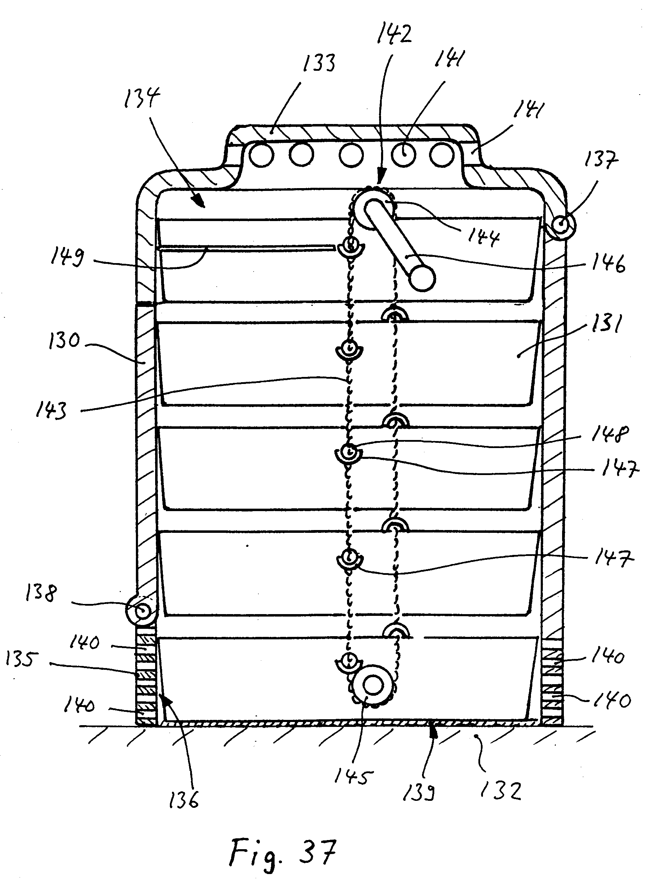

Ein weiteres Ausführungsbeispiel einer Kompostiervorrichtung (siehe Fig. 37) enthält ein geschlossenes Gehäuse 130, in dem mehrere wannenartige Kompostbehälter 131 aufgenommen sind. Das Gehäuse 130 steht auf dem Untergrund 132 und weist einen oberen Deckel 133 für eine obere Einfüllöffnung 134 für Pflanzenmaterial oder Grüngut und eine untere Klappe 135 für eine Entnahmeöffnung 136 zum Entnehmen des Kompostbehälters 131 mit fertigem Kompost auf. Der obere Deckel 133 und die untere Klappe 135 sind an Drehpunkten 137 bzw. 138 am Gehäuse 130 schwenkbar gelagert. Eine Bodenplatte 139 des Gehäuses 130 ist perforiert, so daß der Kontakt zum Erdreich des Untergrundes 132 gewährleistet ist und Mikroorganismen, Würmern und dergleichen, die eine wichtige Rolle beim Rotte- oder Kompostiervorgang einnehmen, der Zutritt in das Gehäuse 130 ermöglicht ist. Die Lochgröße der Perforation ist jedoch derart gering gewählt, daß z. B. Wühlmäuse nicht in das Gehäuse 130 gelangen können. Die Bodenplatte 139 kann auch ein Lochblech sein, das in das unten offene Gehäuse 130 eingelegt wird. Zuluftöffnungen 140 im Bodenbereich und Abluftöffnungen 141 im oberen Deckel 133 oder im Gehäuseoberteil sorgen für eine Belüftung und für geeignete klimatische Bedingungen im Gehäuse 130, das zusätzlich eine Isolationsschicht zur verbesserten Wärmespeicherung aufweisen kann.

Das Gehäuse 130 weist eine Transporteinrichtung 142 für die Kompostbehälter 131 auf, die zwei an gegenüberliegenden Seiten im Gehäuse 130 angeordnete Tragketten 143 enthält. In Fig. 37 ist nur die eine Kette 143 dargestellt, die Beschreibung gilt jedoch ebenso für die andere Kette. Die Kette 143 läuft über ein oberes und ein unteres am Gehäuse 130 gelagertes Umlenkrad 144 bzw. 145 und kann mittels eines motorischen Antriebs oder einer Handkurbel 146, die mit den beiden oberen Umlenkrädern 144 drehfest verbunden ist, auf und ab bewegt werden. An jeder Kette 143 sind in festen Abständen Lagerschalen 147 oder ähnliche Halteeinrichtungen angebracht, die an den Kompostbehältern 131 an zwei äußeren gegenüberliegenden Seiten vorgesehene Bolzen 148 aufnehmen können und somit jeweils einen Kompostbehälter 131 in waagrechter Ausrichtung im Gehäuse 130 vertikal bewegen können. Der gegenseitige Abstand der Lagerschalen 147 an den Ketten 143 ist derart bemessen, daß die Kompostbehälter 131 sich gegenseitig nicht berühren, wenn die untersten Lagerschalen 147 außer Eingriff mit den Bolzen 148 des unten am Boden stehenden Kompostbehälters 131 sind. Der unterste Kompostbehälter 131 kann dann über Entnahmeschienen (nicht dagestellt) durch die geöffnete Entnahmeöffnung 136 aus dem Gehäuse 130 entnommen werden.

Die Kompostbehälter 131 bestehen aus Kunststoff oder Blech und sind komplett perforiert (Perforierung nicht dargestellt), so daß das Füllgut ausreichend durchlüftet werden kann und der Zutritt von Mikroorganismen möglich ist, insbesondere wenn der Kompostbehälter unten am Bodenteil aufliegt.

Zum Befüllen der Kompostiervorrichtung wird ein Kompostbehälter 131 bei geöffnetem Deckel 133 auf seitlichen Einführschienen 149 in das Gehäuse 130 eingeschoben und an auf Höhe der Schienen 149 positionierten Lagerschalen 147 an den Förderketten 143 eingehängt. Das Pflanzenmaterial oder Grüngut wird in den Kompostbehälter 131 gefüllt, der anschließend mit der Handkurbel 146 bis auf den Boden abgesenkt wird. Weitere Kompostbehälter 131 werden anschließend in gleicher Weise in das Gehäuse 130 gebracht und mit der Förderkette 143 abgesenkt, so daß sie aufeinander liegen.

Zum erneuten Befüllen werden die eingehängten Kompostbehälter 131 wieder nach oben gekurbelt. Nachdem im erstbefüllten Kompostbehälter 131 der Rotteprozeß vollendet ist, werden die oben aufliegenden Kompostbehälter 131 angehoben und der unterste Kompostbehälter 131 wird über die Entnahmeschienen durch die untere Entnahmeöffnung 136 aus dem Gehäuse 130 entnommen.

## Patentansprüche

1. Vorrichtung zum Verarbeiten von Pflanzenmaterial, Pflanzenteilen, Pflanzenabfall oder vergleichbarem Biomüll,
**gekennzeichnet durch**
eine Förderschneckeneinheit (18) und eine nachgeordnete Zerkleinerungseinrichtung (20) für das verdichtete Pflanzenmaterial, die einen Schneidmessersatz (21) mit einer Lochscheibe (24) aufweist, wobei die Förderschneckeneinheit (18) eine Förderschnecke (19) mit einem als Schneide (39) ausgebildeten Schneckenkopf (33) und eine Gegenschneide (43) an einem Gehäuse der Förderschneckeneinheit (18) aufweist.

2. Vorrichtung nach Anspruch 1, dadurch gekennzeichnet, daß der Schneckenkopf (33) von der Schnecke axial in Förderrichtung zur Bildung einer spitzwinkligen Schneide (39) hervorsteht.

3. Vorrichtung nach Anspruch 2, dadurch gekennzeichnet, daß die Gegenschneide (43) an einer an einem Gehäuse (3) der Förderschneckeneinheit (18) ausgebildeten Eintrittsöffnung (17) zur Förderschnecke (19) vorgesehen ist.

4. Vorrichtung nach einem der Ansprüche 1 bis 3, dadurch gekennzeichnet, daß die Gegenschneide (43) von einer am Gehäuse (3) befestigten Schneidplatte (45) gebildet ist.

5. Vorrichtung nach einem der Ansprüche 1 bis 4, dadurch gekennzeichnet, daß der Schneidmessersatz (21) als Austauscheinheit ausgebildet ist, wobei Schneidmessersätze mit unterschiedlicher Schneiden- und Lochscheibengestaltung und Schneidfähigkeit in Abhängigkeit von einer jeweiligen Beschaffenheit der Pflanzen bzw. des Biomülls einsetzbar sind.

6. Vorrichtung nach einem der Ansprüche 1 bis 5, dadurch gekennzeichnet, daß die Lochscheibe (24) eine Vielzahl von Öffnungen oder Löchern (44) für den Pflanzendurchtritt aufweist, wobei die Lochränder die Gegenschneiden für die Schneide (23) einer Vorschneideplatte (22) des Schneidmessersatzes (21) bilden.

7. Vorrichtung nach einem der Ansprüche 1 bis 6, dadurch gekennzeichnet, daß der Schneidmessersatz (21) ein zweites Schneidmesser (28) hinter der Lochscheibe (24) aufweist, dessen mindestens eine Schneide mit den die jeweiligen Gegenschneiden bildenden rückwärtigen Lochrändern zusammenwirkt.

8. Vorrichtung nach einem der Ansprüche 5 bis 7, dadurch gekennzeichnet, daß die Löcher (44) rund, elliptisch oder langlochartig ausgebildet sind und der Lochdurchmesser bzw. die Öffnungsgröße variierbar ist.

9. Vorrichtung nach einem der Ansprüche 6 bis 8, dadurch gekennzeichnet, daß das bzw. die Schneidmesser (22, 28) bzw. Schneiden gegen die Lochscheibe (24) vorgespannt sind.

10. Vorrichtung nach einem der Ansprüche 6 bis 9, dadurch gekennzeichnet, daß die Schneiden (47) der Schneidmesser (22, 28) sichelförmig gebogen sind.

11. Vorrichtung nach einem der Ansprüche 1 bis 10, dadurch gekennzeichnet, daß ein Spalt (35) zwischen dem Umfang (33) der Schnecke (19) und der umgebenden Gehäuseinnenseite (34) minimiert ist und insbesondere etwa 0,1 mm beträgt.

12. Vorrichtung nach einem der Ansprüche 1 bis 11, dadurch gekennzeichnet, daß auf der Innenseite (34) des Gehäuses (3) der Schnecke (19) eine oder mehrere ring- oder wendelförmige Nuten (36) ausgebildet sind, die Gegenschneiden (38) für die Schneide (39) der Schnecke (19) bilden.

13. Vorrichtung nach Anspruch 12, dadurch gekennzeichnet, daß die Steigungsrichtung der wendelförmigen Nut bzw. Nuten (36) entgegengesetzt zur Steigungsrichtung der Schnecke (19) ist und insbesondere etwa 21° beträgt.

14. Vorrichtung nach Anspruch 12 oder 13, dadurch gekennzeichnet, daß das Verhältnis der Breite der Nuten (36) zur Breite von dazwischenliegenden Stege (37) etwa 3:1 beträgt.

15. Vorrichtung nach einem der Ansprüche 1 bis 14, dadurch gekennzeichnet, daß sie eine Zuführeinrichtung (5) zum Zuführen des Pflanzenmaterials in die Förderschneckeneinheit (18) aufweist.

16. Vorrichtung nach Anspruch 15, dadurch gekennzeichnet, daß die Zuführeinrichtung (5) als Zuführkanal zum schwerkraftunterstützten Zuführen des Pflanzenmaterials ausgebildet ist.

17. Vorrichtung nach Anspruch 15 oder 16, dadurch gekennzeichnet, daß die Zuführeinrichtung eine mechanische Fördereinrichtung (5) aufweist.

18. Vorrichtung nach Anspruch 17, dadurch gekennzeichnet, daß die Fördereinrichtung (5) zumindest ein umlaufendes oder rotierendes Fördermittel (8, 9) mit Eingriffselementen (10) für das Pflanzenmaterial aufweist.

19. Vorrichtung nach Anspruch 18, dadurch gekennzeichnet, daß zwei Fördermittel (8, 9) an einem im wesentlichen abwärts gerichteten Förderkanal (11) angeordnet sind.

20. Vorrichtung nach Anspruch 19, dadurch gekennzeichnet, daß der Förderkanal (11) einen sich in Förderrichtung verengenden Querschnitt aufweist.

21. Vorrichtung nach Anspruch 19 oder 20, dadurch gekennzeichnet, daß der Förderkanal (11) einen variablen Querschnitt aufweist.

22. Vorrichtung nach einem der Ansprüche 18 bis 21, dadurch gekennzeichnet, daß ein Fördermittel ketten- oder bandartig ausgebildet ist und eine Begrenzung des Förderkanals (11) bildet, und dieses Fördermittel zumindest im unteren Bereich in der Nähe zur Verdichterschnecke (19) zur Veränderung des Querschnitts des Förderkanals (11) bewegbar gelagert ist.

23. Vorrichtung nach Anspruch 22, dadurch gekennzeichnet, daß das Fördermittel aus einer Ausgangsstellung mit kleinem Förderkanalquerschnitt gegen eine Spannkraft verlagert werden kann.

24. Vorrichtung nach Anspruch 23, dadurch gekennzeichnet, daß die Spannkraft von einem Federelement (53) bereitgestellt wird und einstellbar ist.

25. Vorrichtung nach einem der Ansprüche 16 bis 25, dadurch gekennzeichnet, daß die Fördereinrichtung (5) zwei band- oder kettenartige, antreibbare Fördermittel (8, 9) aufweist, die zwischen sich einen sich in Förderrichtung verjüngenden Förderkanal (11) bilden.

26. Vorrichtung nach Anspruch 25, dadurch gekennzeichnet, daß das Fördermittel (8, 9) zumindest eine Kette mit daran angebrachten Förderprofilen (10) aufweist.

27. Vorrichtung nach Anspruch 26, dadurch gekennzeichnet, daß mehrere Ketten nebeneinanderliegend angeordnet sind und die Ketten zueinander versetzt angeordnete Förderbleche oder -profile aufweisen.

28. Vorrichtung nach einem der Ansprüche 17 bis 27, dadurch gekennzeichnet, daß zumindest eines der Fördermittel (8, 9) eine drehbare Walze oder Häckselwalze (55, 56) ist, die an der Eintrittsöffnung (17) zur Verdichterschnecke (19) angeordnet ist.

29. Vorrichtung nach Anspruch 28, dadurch gekennzeichnet, daß die Walze (55, 56) Förderelemente wie z. B. Förderhaken, Förderzähne oder dergleichen aufweist.

30. Vorrichtung nach Anspruch 29, dadurch gekennzeichnet, daß die Förderzähne Schneiden (93) in der Art eines Häckselmessers aufweisen.

31. Vorrichtung nach Anspruch 30, dadurch gekennzeichnet, daß die Schneiden (93) radial zur Rotationsachse (90, 91) der Häckselwalzen (55, 56) angeordnet sind.

32. Vorrichtung nach einem der Ansprüche 28 bis 31, dadurch gekennzeichnet, daß ein Kamm (95, 96) mit seinen Zinken (97) in die axialen Zwischenräume (94) zwischen den Häckselmessern (92) der Häckselwalzen (55, 56) greift.

33. Vorrichtung nach einem der Ansprüche 18 bis 32, dadurch gekennzeichnet, daß die Antriebsgeschwindigkeiten bzw. Drehzahlen der Fördermittel (8, 9) bzw. der Häckselwalzen (55, 56) gemeinsam oder jeweils einzeln für sich verstellbar sind und insbesondere unterschiedlich eingestellt sind.

34. Vorrichtung nach einem der Ansprüche 1 bis 33, dadurch gekennzeichnet, daß eine Dehydratisierungseinrichtung (61) vorgesehen ist.

35. Vorrichtung nach Anspruch 34, dadurch gekennzeichnet, daß die Dehydratisierungseinrichtung (61) hinter dem Schneidmessersatz (21) angeordnet ist und eine Pressschnecke (62) aufweist.

36. Vorrichtung nach Anspruch 35, dadurch gekennzeichnet, daß auf einer Gehäuseinnenseite der Dehydratisierungseinrichtung (61) Leiteinrichtungen (111,113, 114, 115, 116) gegen eine Rotation des Pflanzenmaterials angeordnet sind.

37. Vorrichtung nach Anspruch 36, dadurch gekennzeichnet, daß eine Schieberblende (105) zum Regulieren der Größe einer Austrittsöffnung (107) für das Pflanzenmaterial am Gehäuseend (67) der Dehydratisierungseinrichtung (61) angebracht ist.

38. Vorrichtung nach Anspruch 36 oder 37, dadurch gekennzeichnet, daß der feste Pflanzenabfall für eine Kompostierung, insbesondere eine zentrale Mietenkompostierung, gesammelt wird und die ausgepreßte Flüssigkeit zur Weiterverwendung abgeführt wird.

39. Vorrichtung nach einem der Ansprüche 1 bis 38, dadurch gekennzeichnet, daß sie eine gesonderte Zuführung (104) im Verdichtergehäuse (3) für stab- oder stangenartiges Material wie Äste (48) oder Zweige aufweist.

40. Vorrichtung nach einem der Ansprüche 17 bis 38, dadurch gekennzeichnet, daß ein Antriebsmotor (12; 100) für die Fördereinrichtung (5) und die Verdichtereinrichtung (18) vorgesehen ist.

41. Vorrichtung nach Anspruch 40, dadurch gekennzeichnet, daß ein Überlastschutz zur Unterbrechung des Antriebs der Förder- und der Verdichtereinrichtung vorgesehen ist.

42. Vorrichtung nach Anspruch 40 oder 41, dadurch gekennzeichnet, daß eine Rutsch- oder Reibungskupplung als Überlastschutz vorgesehen ist.

43. Vorrichtung nach einem der Ansprüche 40 bis 42, dadurch gekennzeichnet, daß der Antriebsmotor ein Elektromotor ist und ein Überlastschutz bei Überschreiten einer festgelegten Stromaufnahme ausgelöst wird.

44. Vorrichtung nach einem der Ansprüche 1 bis 43, dadurch gekennzeichnet, daß an der Vorrichtung ein Flüssigkeitsanschluß zum Zuführen von Spül- und/oder Reinigungsflüssigkeit angebracht ist.

45. Vorrichtung nach einem der Ansprüche 1 bis 44, dadurch gekennzeichnet, daß der Förderkanal (11) im wesentlichen spitzwinklig in Drehrichtung der Verdichterschnecke (19) zur Verdichterschnecke (19) hin mündet.

46. Vorrichtung nach einem der Ansprüche 1 bis 45, dadurch gekennzeichnet, daß der Förderkanal (11) im wesentlichen abwärts verläuft.

47. Vorrichtung nach einem der Ansprüche 1 bis 46, dadurch gekennzeichnet, daß sie mit in Förderschneckenrichtung abwärts geneigter Rotationsachse der Förderschnecke (19) angeordnet ist.

48. Kompostiervorrichtung mit einem Gehäuse und einer Einfüllöffnung für ein zu kompostierendes Pflanzenmaterial,
**gekennzeichnet durch**
eine Transporteinrichtung (72; 142), mit der das eingefüllte Pflanzenmaterial während des Kompostierprozesses in dem Gehäuse (70; 130) transportierbar ist.

49. Kompostiervorrichtung nach Anspruch 48, dadurch gekennzeichnet, daß der Transport stetig oder intermittierend erfolgt.

50. Kompostiervorrichtung nach Anspruch 48 oder 49, dadurch gekennzeichnet, daß eine oder mehrere Entnahmepositionen für den erzeugten Kompost vorgesehen sind.

51. Kompostiervorrichtung nach einem der Ansprüche 48 bis 50, dadurch gekennzeichnet, daß das Pflanzenmaterial als kontinuierliche Schicht oder in Einzelportionen eingebracht und transportabel ist.

52. Kompostiervorrichtung nach einem der Ansprüche 48 bis 51, dadurch gekennzeichnet, daß die Transporteinrichtung ein Linear- oder ein Umlaufförderer (142 bzw. 72) mit einzelnen Kompostbehältern (131; 71) ist.

53. Kompostiervorrichtung nach Anspruch 50, dadurch gekennzeichnet, daß die Kompostbehälter (71; 131) an Förderketten (77, 78; 143) des Förderers gelagert sind.

54. Kompostiervorrichtung nach Anspruch 52 oder 53, dadurch gekennzeichnet, daß die Kompostbehälter (71) mit dem Umlaufförderer (72) paternosterartig im wesentlichen in vertikaler Richtung im Gehäuse (70) umlaufen.

55. Kompostiervorrichtung nach einem der Ansprüche 48 bis 54, dadurch gekennzeichnet, daß das Gehäuse (70) eine Klimatisierungseinrichtung aufweist.

56. Kompostiervorrichtung nach einem der Ansprüche 52 bis 55, dadurch gekennzeichnet, daß die Kompostbehälter (71; 131) aus dem Gehäuse (70; 130) entnehmbar sind.

57. Kompostiervorrichtung nach Anspruch 56, dadurch gekennzeichnet, daß eine Entnahmevorrichtung zum Zuführen und Entnehmen eines Kompostbehälters (71) vorgesehen ist.

58. Kompostiervorrichtung nach Anspruch 56 oder 57, dadurch gekennzeichnet, daß in dem Gehäuse (130) Führungsschienen (149) zum Zuführen und Entnehmen eines Kompostbehälters (131) in das bzw. aus dem Gehäuse (130) vorgesehen sind.

59. Kompostiervorrichtung nach einem der Ansprüche 52 bis 58, dadurch gekennzeichnet, daß die Kompostbehälter (71; 131) wannenartig gebildet sind und perforierte Seiten- und Bodenwände aufweisen.

60. Kompostiervorrichtung nach einem der Ansprüche 48 bis 59, dadurch gekennzeichnet, daß in dem Gehäuse (70; 130) Lüftungsöffnungen vorgesehen sind.

61. Kompostiervorrichtung nach einem der Ansprüche 48 bis 60, dadurch gekennzeichnet, daß eine Bodenplatte (139) des Gehäuses (130) perforiert ist.

62. Verfahren zum Mietenkompostieren von Pflanzenmaterial,
**dadurch gekennzeichnet**,
daß das Pflanzenmaterial wesentlich zerkleinert wird,
wobei die Pflanzenstruktur aufgeschlossen wird,
daß der Restfeuchtegehalt des Pflanzenmaterials eingestellt wird,
daß eine Kompostierumgebung bereitgestellt wird,
daß das Pflanzenmaterial auf eine Kompostierstrecke in der Kompostmiete gebracht wird, auf der es bewegbar ist und von der es nach Vollendung der Kompostierung entnehmbar ist.

63. Verfahren nach Anspruch 62, dadurch gekenneichnet, daß Kompostierbeschleuniger mit Mikroorganismen zugegeben werden.

64. Verfahren nach Anspruch 62 oder 63, dadurch gekenneichnet, daß das Pflanzenmaterial portioniert in die Kompostmiete eingebracht wird und portioniert kompostiert wird.
